# EUROPEAN PATENT APPLICATION

(11) **EP 4 756 411 A1**
(43) Date of publication of application: **10.06.2026**
(21) Application number: 24862904.0
(22) Date of filing: 06.09.2024
(51) Int. Cl.: G01N 21/88

(54) **INSPECTION SYSTEM, INSPECTION METHOD, AND ROBOT SYSTEM**

(30) Priority: 06.09.2023 JP 2023144718; 06.09.2023 JP 2023144720
(71) Applicant: KAWASAKI JUKOGYO KABUSHIKI KAISHA, Kobe-shi, Hyogo 650-8670 (JP)
(72) Inventor: SUGIMOTO Shunichi, Kobe-shi, Hyogo 650-8670 (JP); OHNISHI Masafumi, Kobe-shi, Hyogo 650-8670 (JP); HARA Kazunori, Kobe-shi, Hyogo 650-8670 (JP); YAMASUMI Satoru, Kobe-shi, Hyogo 650-8670 (JP); HORIKE Toshiki, Kobe-shi, Hyogo 650-8670 (JP)
(74) Representative: Müller-Boré & Partner Patentanwälte PartG mbB
(86) International application number: PCT/JP2024/032030
(87) International publication number: WO 2025/053255

(57) **Abstract**

An inspection system (100) according to this disclosure includes a robot (10), an inspector (20), and a processor (41, 51, 61). The processor performs processing of generating a movement path (13) of the robot; processing of generating the coordinate transformation information (71, 72) based on the movement path; processing of operating the robot based on the generated movement path to inspect the workpiece (200) using the inspector and to acquire the inspection image (21); processing of detecting a target (201) on the workpiece in the acquired inspection image; processing of converting coordinate values of the target in the inspection coordinate system into coordinate values in the three-dimensional coordinate system based on the generated coordinate transformation information; and processing of indicating a position of the target on the actual workpiece or in a three-dimensional image of the workpiece based on the converted coordinate values of the target in the three-dimensional coordinate system.

## Description

### Technical Field

The present disclosure relates to an inspection system, an inspection method, and a robot system.

### Background Art

Painting quality inspection methods are known in the art. For example, such a painting quality inspection method is disclosed in Japanese Patent Laid-Open Publication No. JP H05-126758.

The above Japanese Patent Laid-Open Publication No. JP H05-126758 discloses a painting quality inspection method for inspecting painting quality of a vehicle body as a painted object after completion of painting. In this painting quality inspection method, an image of the vehicle body is first captured by a television camera. Subsequently, image information based on the captured image of the vehicle body is analyzed by a computer. It is then determined whether a painting defect is present, and when a painting defect is determined to be present, the position on the vehicle body at which the painting defect has occurred is required to be identified. The identified position of the painting defect is printed on an illustration of the vehicle body on a printed sheet.

### Prior Art

### Patent Document

Patent Document 1: Japanese Patent Laid-Open Publication No. JP H05-126758

### Summary of the Invention

### Problems to be Solved by the Invention

However, in the painting quality inspection method stated in the above Japanese Patent Laid-Open Publication No. JP H05-126758, since the position of the painting defect is printed on an illustration of the vehicle body, which is a two-dimensional image, the position of the painting defect can be accurately indicated on the illustration for flat portions or portions having a small curvature on the actual vehicle body, but for portions of the actual vehicle body having a large curvature or a complicated curved surface, it may be difficult to accurately indicate the position of the painting defect on the illustration of the vehicle body. The same problem also arises when detecting targets other than painting defects and when inspecting workpieces other than vehicle bodies. Accordingly, since it may be difficult to accurately indicate the position of a target on an illustration of a workpiece in portions of the workpiece having a large curvature or a complicated curved surface, it is desired to accurately indicate the position of the target even in such portions of the workpiece, which have a large curvature or a complicated curved surface.

The present disclosure is intended to solve the above problem, and one object of the present disclosure is to provide an inspection system and an inspection method capable of accurately indicating the position of a target even in portions of the workpiece having a large curvature or a complicated curved surface. In addition, another object of the present disclosure is to provide a robot system capable of accurately performing work on a workpiece using an effector.

### Means for Solving the Problems

An inspection system according to a first aspect of the present disclosure includes a robot; an inspector that inspects a workpiece; and a processor that performs processing of moving the inspector relative to the workpiece using the robot to generate a movement path of the robot in inspection of the workpiece using the inspector, processing of generating coordinate transformation information to convert coordinate values of an inspection image in an inspection coordinate system acquired by inspecting the workpiece using the inspector based on the generated movement path into coordinate values in a three-dimensional coordinate system representing coordinate values of the workpiece in three dimensions, processing of operating the robot based on the generated movement path to inspect the workpiece using the inspector and to acquire the inspection image, processing of detecting a target on the workpiece in the acquired inspection image, processing of converting coordinate values of the target in the inspection coordinate system into coordinate values in the three-dimensional coordinate system based on the generated coordinate transformation information, and processing of indicating a position of the target on the actual workpiece or in a three-dimensional image of the workpiece based on the converted coordinate values of the target in the three-dimensional coordinate system.

In the inspection system according to a first aspect of the present disclosure, as discussed above, processing of converting coordinate values of the target in the inspection coordinate system into coordinate values in the three-dimensional coordinate system based on the generated coordinate transformation information; and processing of indicating a position of the target on the actual workpiece or in a three-dimensional image of the workpiece based on the converted coordinate values of the target in the three-dimensional coordinate system are performed. Accordingly, since the position of the target can be indicated on the actual workpiece or in a three-dimensional image of the workpiece, unlike a case in which the position of the target is indicated on a two-dimensional image of the workpiece, it is possible to accurately indicate the position of the target even in portions of the workpiece having a large curvature or a complicated curved surface.

An inspection method according to a second aspect of the present disclosure includes moving an inspector relative to a workpiece using a robot to generate a movement path of the robot in inspection of the workpiece using the inspector; generating coordinate transformation information to convert coordinate values of an inspection image in an inspection coordinate system acquired by inspecting the workpiece using the inspector based on the generated movement path into coordinate values in a three-dimensional coordinate system representing coordinate values of the workpiece in three dimensions; operating the robot based on the generated movement path to inspect the workpiece using the inspector and to acquire the inspection image; detecting a target on the workpiece in the acquired inspection image; converting coordinate values of the target in the inspection coordinate system into coordinate values in the three-dimensional coordinate system based on the generated coordinate transformation information; and indicating a position of the target on the actual workpiece or in a three-dimensional image of the workpiece based on the converted coordinate values of the target in the three-dimensional coordinate system.

In the inspection method according to the second aspect of the present disclosure, as discussed above, converting coordinate values of the target in the inspection coordinate system into coordinate values in the three-dimensional coordinate system based on the coordinate transformation information generated based on the movement path of the robot; and indicating a position of the target on the actual workpiece or in a three-dimensional image of the workpiece based on the converted coordinate values of the target in the three-dimensional coordinate system are included. Accordingly, since the position of the target can be indicated on the actual workpiece or in a three-dimensional image of the workpiece, unlike a case in which the position of the target is indicated on a two-dimensional image of the workpiece, it is possible to provide an inspection method capable of accurately indicating the position of the target even in portions of the workpiece having a large curvature or a complicated curved surface.

A robot system according to a third aspect of the present disclosure includes a robot; an effector that performs work on a workpiece; and a processor that performs processing of moving the effector relative to the workpiece using the robot to generate a movement path of the robot during work on the workpiece using the effector; processing of generating, based on the generated movement path, coordinate information including a movement amount of the robot in a direction along the movement path and coordinate values in a three-dimensional coordinate system representing coordinate values of the workpiece in three dimensions, and processing of operating the robot based on the generated movement path and the generated coordinate information to perform work on the workpiece using the effector.

In the robot system according to the third aspect of the present disclosure, as discussed above, a processor that performs processing of generating, based on the generated movement path, coordinate information including a movement amount of the robot in a direction along the movement path and coordinate values in a three-dimensional coordinate system representing coordinate values of the workpiece in three dimensions, and processing of operating the robot based on the generated movement path and the generated coordinate information to perform work on the workpiece using the effector is provided. Accordingly, since the operation and trajectory of the robot can be grasped by using not only the movement path but also the movement amount of the robot and the coordinate values of the workpiece included in the coordinate information, it is possible to accurately grasp the timing for controlling work on the workpiece. Consequently, it is possible to accurately perform work on the workpiece using the effector.

### Effect of the Invention

According to the present disclosure, as discussed above, it is possible to accurately indicate the position of a target even in portions of the workpiece having a large curvature or a complicated curved surface.

### Brief Description of the Drawings

FIG. 1 is a diagram showing a configuration of an inspection system according to a first embodiment.
FIG. 2 is a block diagram showing the inspection system according to the first embodiment.
FIG. 3 is a flowchart illustrating control processing of the inspection system according to the first embodiment.
FIG. 4 is a view illustrating generation of movement paths of a robot according to the first embodiment.
FIG. 5 is a diagram illustrating generation of coordinate transformation information in the first embodiment.
FIG. 6 is a diagram (1) illustrating the coordinate transformation information in the first embodiment.
FIG. 7 is a diagram (2) illustrating the coordinate transformation information in the first embodiment.
FIG. 8 is a diagram (1) illustrating inspection of the workpiece in the first embodiment.
FIG. 9 is a diagram (2) illustrating inspection of the workpiece in the first embodiment.
FIG. 10 is a diagram (3) illustrating inspection of the workpiece in the first embodiment.
FIG. 11 is a diagram illustrating an inspection image in the first embodiment.
FIG. 12 is a diagram illustrating coordinate transformation in the first embodiment.
FIG. 13 is a diagram illustrating indication of a position of a target on the actual workpiece using the robot according to the first embodiment.
FIG. 14 is a diagram illustrating indication of positions of the targets in the three-dimensional image of the workpiece in the first embodiment.
FIG. 15 is a diagram (1) illustrating indication of a plurality of targets treated as a single target in the first embodiment.
FIG. 16 is a diagram showing a configuration of an inspection system according to a second embodiment.
FIG. 17 is a block diagram showing the inspection system according to the second embodiment.
FIG. 18 is a flowchart illustrating control processing of the inspection system according to the second embodiment.
FIG. 19 is a view illustrating inspection of a workpiece in the second embodiment.
FIG. 20 is a diagram illustrating an inspection image in the second embodiment.
FIG. 21 is a diagram illustrating display of an inspection result in the second embodiment.
FIG. 22 is a diagram illustrating a case in which an operation image for operating the robot is operated in the second embodiment.
FIG. 23 is a diagram illustrating indication of a position of a target on the actual workpiece using the robot according to the second embodiment.
FIG. 24 is a diagram illustrating a case in which an operation image for displaying an inspection image is operated in the second embodiment.
FIG. 25 is a diagram illustrating indication of an inspection image in the second embodiment.
FIG. 26 is a diagram illustrating indications of whether processing performed on the target is completed in the second embodiment.
FIG. 27 is a diagram showing a robot system according to a third embodiment.
FIG. 28 is a block diagram showing the robot system according to the third embodiment.
FIG. 29 is a flowchart illustrating control processing of the robot system according to the third embodiment.
FIG. 30 is a view illustrating generation of movement paths of a robot according to the third embodiment.
FIG. 31 is a diagram illustrating generation of coordinate information in the third embodiment.
FIG. 32 is a diagram illustrating the coordinate information in the third embodiment.
FIG. 33 is a diagram illustrating control of operation of the robot using using the coordinate information in the third embodiment.
FIG. 34 is a block diagram (1) showing an inspection system according to a modified example of the first embodiment.
FIG. 35 is a block diagram (2) showing an inspection system according to a modified example of the first embodiment.
FIG. 36 is a flowchart illustrating control processing of the inspection system according to a modified example of the first embodiment.
FIG. 37 is a diagram showing a robot according to a modified example of the first embodiment.

### Modes for Carrying Out the Invention

Embodiments embodying the present disclosure will be described with reference to the drawings.

### [First Embodiment]

### (Configuration of Inspection System)

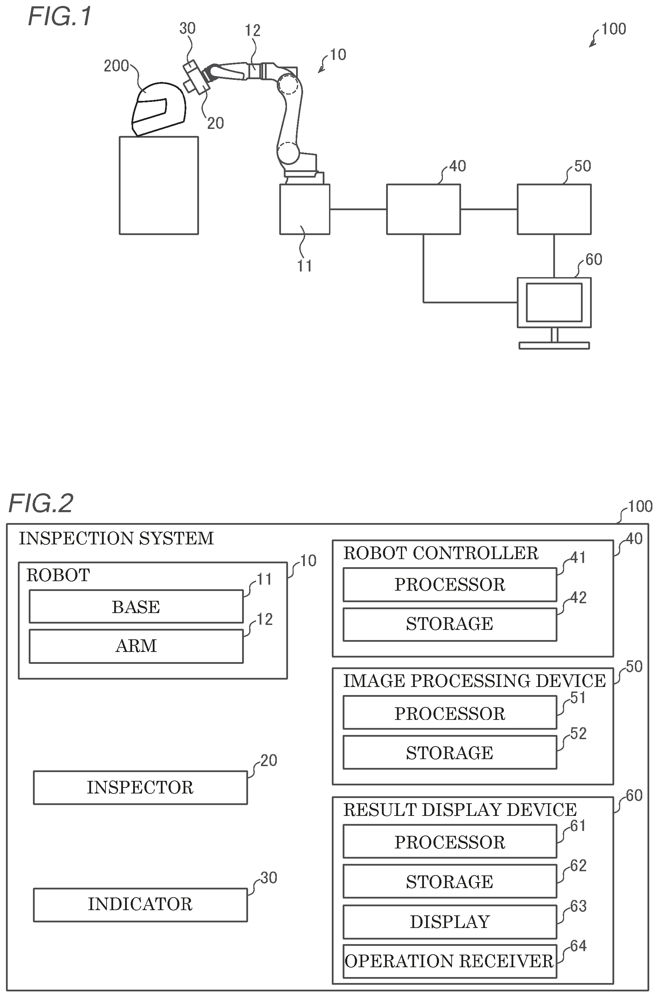

The following description describes an overall configuration of an inspection system 100 according to a first embodiment with reference to FIGS. 1 and 2.

As shown in FIG. 1, the inspection system 100 is an appearance inspection system that inspects the appearance of a workpiece 200. Examples of the workpiece 200 include cars, agricultural machines, pottery, or products of or parts related to home electrical equipment. The workpiece 200 is not particularly limited.

The inspection system 100 includes a robot 10, an inspector 20, an indicator 30, a robot controller 40, an image processing device 50, and a result display device 60.

The robot 10 moves the inspector 20 relative to the workpiece 200. The robot 10 is a vertical multi-joint robot. The robot 10 includes a base 11, and an arm 12 connected to the base 11. The base 11 is fixed to a mounting surface such as a floor, a wall, and a ceiling. Also, the base 11 may be attached to a movable carriage. The arm 12 includes joints. Each of the joints includes a servomotor as its driving source. In addition, the inspector 20 and the indicator 30 are held at the distal end of the arm 12. The robot 10 moves the inspector 20 and the indicator 30, which are held at the distal end of the arm 12, relative to the fixed workpiece 200 by driving the joints of the arm 12.

The inspector 20 is arranged on the robot 10 to inspect the workpiece 200. The inspector 20 is an imaging unit that captures images of the workpiece 200. Specifically, the inspector 20 is a line camera that is moved along the surface of the workpiece 200 by the robot 10 to scan and capture images of the surface of the workpiece 200.

The indicator 30 is arranged on the robot 10 and indicates the positions of targets 201 to be obtained by inspection on the workpiece 200. The indicator 30 is a laser irradiation unit that emits laser light to indicate the positions of the targets 201 on the workpiece 200.

As shown in FIGS. 1 and 2, the robot controller 40 controls operation of the robot 10. The robot controller 40 includes a processor 41 and a storage 42. The processor 41 includes a processor and performs various types of processing relating to operation of the robot 10. The storage 42 includes a non-volatile memory, and stores coordinate transformation information 71 or 72, which will be described later.

The image processing device 50 performs image processing on images captured by the inspector 20. In addition, the image processing device 50 controls imaging timing of the inspector 20. The image processing device 50 includes a processor 51 and a storage 52. The processor 51 includes a processor to perform various types of processing relating to images captured by the inspector 20 and imaging timing of the inspector 20. The storage 52 includes a non-volatile memory to store inspection images 21, which will be described later.

The result display device 60 displays inspection results of the workpiece 200. The result display device 60 includes a processor 61, a storage 62, a display 63, and an operation receiver 64. The processor 61 includes a processor, and performs various types of processing relating to display of inspection results of the workpiece 200. The storage 62 includes a non-volatile memory to store the coordinate transformation information 72, three-dimensional images of the workpiece 200, and the like. The display 63 includes a monitor such as a liquid crystal display monitor, and displays screens of inspection results of the workpiece 200. The operation receiver 64 includes an input device such as a mouse and keyboard to receive user input operations. Note that the display 63 and the operation receiver 64 may be integrated. In other words, the display 63 and the operation receiver 64 may be configured by a combined operation and display unit such as a touch panel.

### (Control Processing of Inspection System)

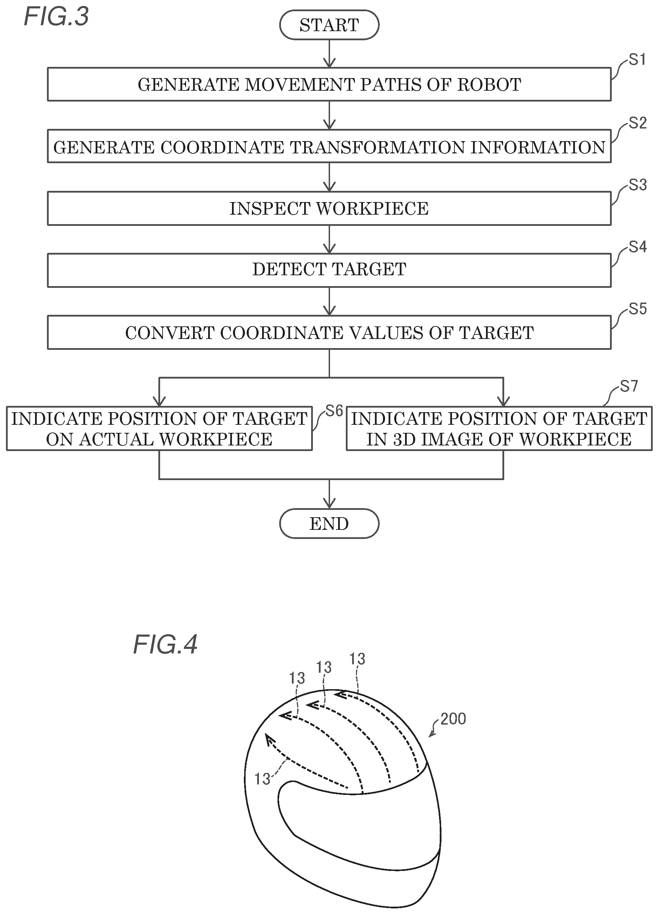

The following description describes processing of the inspection system 100 with reference to FIGS. 3 to 15.

As shown in FIGS. 3 and 4, in step S1, the processor 41 of the robot controller 40 performs processing of moving the inspector 20 relative to the workpiece 200 using the robot 10 to generate movement paths 13 of the robot 10 in inspection of the workpiece 200 using the inspector 20. The movement paths 13 are paths for operating the arm 12 of the robot 10 and are generated to inspect the workpiece 200.

For example, the processor 41 receives instructions from a user for operation of the arm 12 and generates the movement paths 13 of the robot 10 based on the received instructions. In addition, for example, the processor 41 performs processing of automatically generating the movement paths 13 of the robot 10 independently of instructions from the user for the operation of the arm 12. The processor 41 performs processing of generating the movement paths 13 along a surface, such as a curved surface, of the workpiece 200. Also, the processor 41 may perform processing of generating the movement paths 13 of the robot 10 in real-time.

Here, in the first embodiment, as shown in FIGS. 3 and 5 to 7, in step S2, the processor 41 of the robot controller 40 performs processing of generating the coordinate transformation information 71 or 72 based on the generated movement paths 13. The coordinate transformation information 71 or 72 is information for converting coordinate values in an inspection coordinate system of the later-described inspection images 21 acquired by inspecting the workpiece 200 using the inspector 20 into coordinate values in a three-dimensional coordinate system representing coordinate values of the workpiece 200 in three dimensions. The inspection coordinate system is a two-axis orthogonal coordinate system having two axes orthogonal to each other, while the three-dimensional coordinate system is a three-axis orthogonal coordinate system having three axes orthogonal to each other. Details of coordinate transformation using the coordinate transformation information 71 or 72 will be described later.

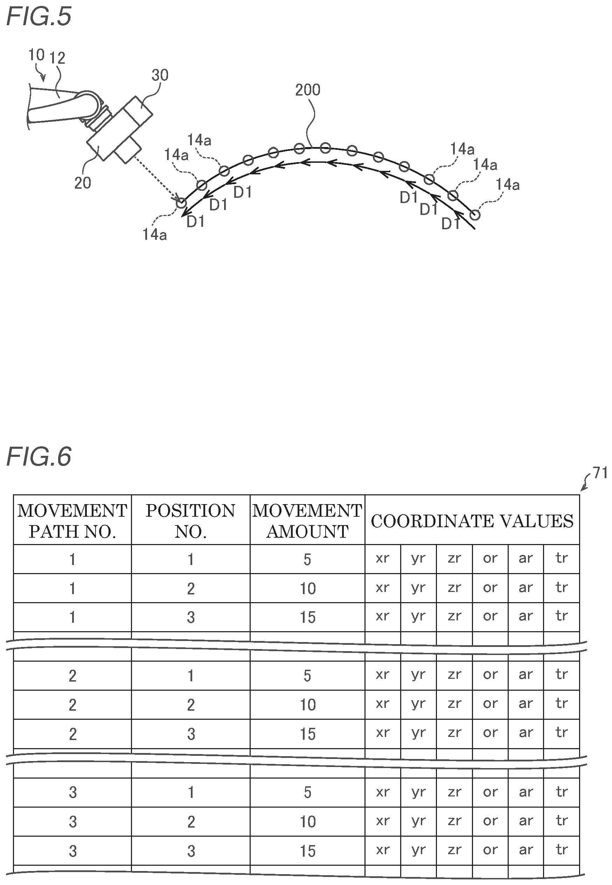

As shown in FIG. 5, the processor 41 performs processing of acquiring coordinate values in the three-dimensional coordinate system at intervals of a first distance interval D1 along the movement paths 13 to generate the coordinate transformation information 71 or 72. In this case, the processor 41 actually moves the inspector 20 along the movement paths 13 using the robot 10 relative to the workpiece 200, and performs processing of acquiring coordinate values in the three-dimensional coordinate system at intervals of the first distance interval D1. Here, the first distance interval D1 is a distance interval of control points 14a. The processor 41 performs processing of acquiring the coordinate values of the control points 14a in the three-dimensional coordinate system at intervals of the first distance interval D1. When the inspector 20 is an image capturer, the control points 14a are set at imaging focal positions of the inspector 20. In addition, the imaging focal positions of the inspector 20 are set near the surface of the workpiece 200. The control points 14a are provided for processing of acquiring the coordinate values in the three-dimensional coordinate system.

In the first embodiment, the first distance interval D1 is greater than the later-described second distance interval D2 for inspection of the workpiece 200. For example, the first distance interval D1 is approximately 5 mm, and the second distance interval D2 is approximately 0.1 mm. The first distance interval D1 and the second distance interval D2 vary depending on the workpiece 200, and are not particularly limited. The first distance interval D1 is set to a value that ensures accuracy required to indicate the position of the later-described targets 201. Also, the second distance interval D2 is set to a value that ensures accuracy required to inspect the workpiece 200.

Note that, although only one movement path 13 is illustrated in FIG. 5 for ease of illustration, the processor 41 performs processing of acquiring coordinate values in the three-dimensional coordinate system along all the movement paths 13 to generate the coordinate transformation information 71 or 72.

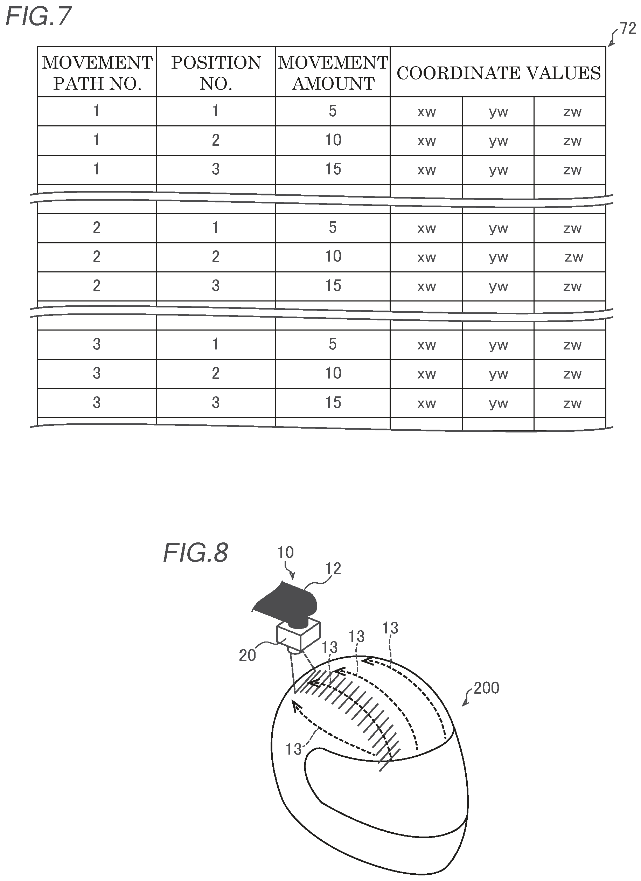

As shown in FIGS. 6 and 7, the coordinate transformation information 71 or 72 is a coordinate transformation table that associates movement amounts of the robot 10 in directions along the movement paths 13 with coordinate values in the three-dimensional coordinate system. In FIGS. 6 and 7, path numbers represent numbers of the movement paths 13, position numbers represent numbers of the control points 14a, the movement amounts represent the movement amounts of the robot 10 at the control points 14a along the movement paths 13, and the coordinate values represent the coordinate values of the control points 14a in the three-dimensional coordinate system. In other words, in the coordinate transformation information 71 or 72, the movement amounts of the robot 10 at the control points 14a are associated with the coordinate values of the control points 14a in the three-dimensional coordinate system for each movement path 13.

In this case, coordinate values of the coordinate transformation information 71 or 72 in the three-dimensional coordinate system may include only values acquired at intervals of the first distance interval D1 as the coordinate values in the three-dimensional coordinate system, or may include values acquired at intervals of the first distance interval D1 as the coordinate values in the three-dimensional coordinate system and values interpolated based on the acquired values as the coordinate values in the three-dimensional coordinate system. That is, the coordinate transformation information 71 or 72 at 5-mm intervals may be generated by acquiring coordinate values at intervals of 5 mm in the three-dimensional coordinate system, or the coordinate transformation information 71 or 72 at 5-mm intervals may be generated by acquiring coordinate values at intervals of 10 mm in the three-dimensional coordinate system and by interpolating values between the acquired coordinate values in the three-dimensional coordinate system. Here, examples of interpolation include polynomial interpolation and linear interpolation. In addition, examples of linear interpolation include straight-line interpolation and circular-arc interpolation. Also, the movement amounts in the coordinate transformation information 71 or 72 may be obtained from movement amounts in actual movement of the robot 10, or may be obtained from movement amounts calculated based on movement commands of the robot 10.

As shown in FIG. 6, in the coordinate transformation information 71, the three-dimensional coordinate system is a robot coordinate system associated with the robot 10. The robot coordinate system is a coordinate system with reference to the base 11. The coordinate transformation information 71 is a coordinate transformation table that associates movement amounts of the robot 10 with coordinate values in the robot coordinate system. In the coordinate transformation information 71, the coordinate values representing the position and the orientation of the control point 14a in the robot coordinate system are used as the coordinate values.

As shown in FIG. 7, in the coordinate transformation information 72, the three-dimensional coordinate system is a workpiece coordinate system associated with the workpiece 200. The workpiece coordinate system is a coordinate system with reference to the workpiece 200. The coordinate transformation information 72 is a coordinate transformation table that associates movement amounts of the robot 10 with coordinate values in the workpiece coordinate system. In the coordinate transformation information 72, the coordinate values representing the position of the control point 14a in the workpiece coordinate system are used as the coordinate values.

For example, the processor 41 acquires the coordinate values in the robot coordinate system to generate the coordinate transformation information 71, and generates the coordinate transformation information 72 based on the generated coordinate transformation information 71. Also, for example, the processor 41 generates the coordinate transformation information 72 from the coordinate transformation information 71 by converting coordinate values of the coordinate transformation information 71 in the robot coordinate system into coordinate values in the workpiece coordinate system by using transformation information such as a transformation matrix or the like.

Also, the processor 41 performs processing of storing the coordinate transformation information 71 or 72 in the storage 42, and performs processing of outputting the coordinate transformation information 72 to the processor 61 of the result display device 60. The processor 61 performs processing of storing the coordinate transformation information 72 in the storage 62.

As shown in FIGS. 3 and 8 to 11, in step S3, the processor 41 of the robot controller 40 performs processing of operating the robot 10 based on the movement paths 13 to inspect the workpiece 200 using the inspector 20. In addition, the processor 51 of the image processing device 50 performs processing of acquiring the inspection images 21 based on output results of the inspector 20. The inspection images 21 are images of the surface of the workpiece 200 captured by the inspector 20.

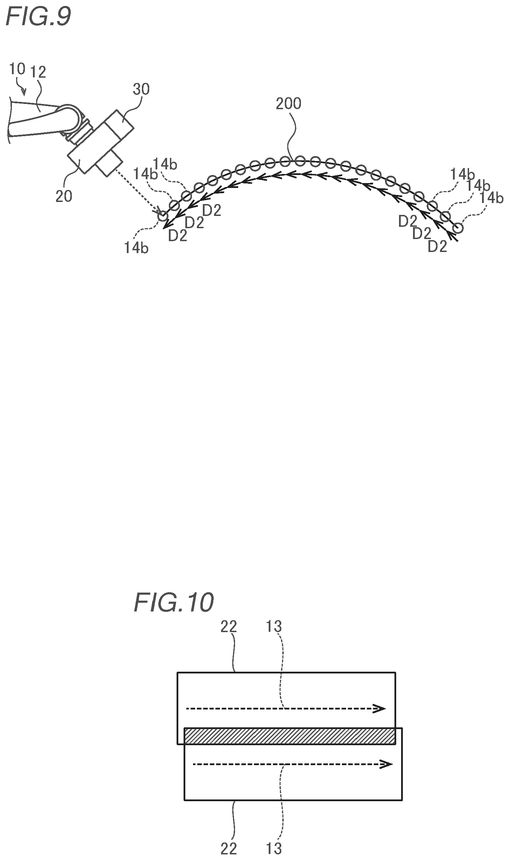

As shown in FIG. 9, the processor 51 performs processing of operating the inspector 20 along the movement paths 13 to inspect the workpiece 200 at intervals of the second distance interval D2 and to acquire the inspection images 21. Specifically, the processor 51 operates the inspector 20 at intervals of the second distance interval D2 to capture images of the workpiece 200 for scan imaging of the workpiece 200. More specifically, the processor 41 performs processing of outputting pulse signals to the processor 51 at intervals of the second distance interval D2. The processor 51 performs processing of outputting trigger signals to the inspector 20 at intervals of the second distance interval D2 based on the pulse signals from the processor 41. The inspector 20 captures images of the workpiece 200 at intervals of the second distance interval D2 based on the trigger signals. Here, the second distance interval D2 is a distance interval of the control points 14b. When the inspector 20 is an image capturer, the control points 14b are set at imaging focal positions of the inspector 20. In addition, the imaging focal positions of the inspector 20 are set near the surface of the workpiece 200. The control points 14b are provided for processing of capturing images of the workpiece 200 using the inspector 20.

Note that, although only one movement path 13 is illustrated in FIG. 9 for the sake of illustration, the processor 41 performs processing of inspecting the workpiece 200 using the inspector 20 for all the movement paths 13. In addition, the processor 51 performs processing of acquiring inspection images 21 for all the movement paths 13.

Also, as shown in FIG. 10, inspection regions 22 of the inspector 20 are set to partially overlap between adjacent movement paths 13. In other words, the inspection region 22 of the inspector 20 for a certain movement path 13 and the inspection region 22 of the inspector 20 for another movement path 13 adjacent to the certain movement path 13 partially overlap each other. Accordingly, inspection omissions can be prevented. Here, the inspection regions 22 are imaging regions in scan imaging along the movement paths 13.

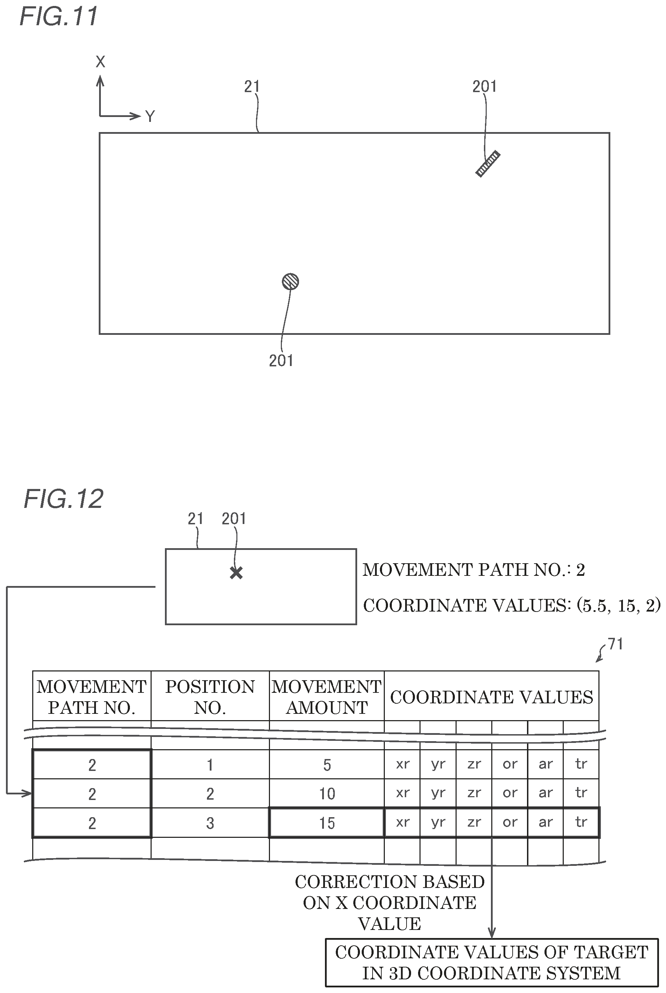

As shown in FIGS. 3 and 11, in step S4, the processor 51 of the image processing device 50 performs processing of detecting the targets 201 on the workpiece 200 in the inspection image 21. The processor 51 performs predetermined image processing on the inspection images 21 to detect the targets 201 in the inspection image 21. Examples of the targets 201 include defects, such as scratches, foreign objects, and dents. For all the inspection images 21, the processor 51 performs processing of detecting a target 201 in each inspection image 21.

As shown in FIG. 11, the inspection coordinate system of the inspection image 21 is a two-dimensional coordinate system in which a direction along the movement paths 13 is defined as a Y-axis direction, and a direction orthogonal to the movement paths 13 is defined as an X-axis direction. The processor 51 performs processing of acquiring coordinate values of the targets 201 in the inspection coordinate system. That is, the processor 51 performs processing of acquiring X-axis and Y-axis coordinate values of the targets 201 in the inspection coordinate system. Also, the processor 51 performs processing of acquiring the coordinate values of the targets 201 in the inspection coordinate system for all the inspection images 21 in which the targets 201 have been detected. In addition, the processor 51 performs processing of storing the inspection images 21, numbers of the movement paths 13 corresponding to the inspection images 21, and the coordinate values of the targets 201 in the inspection coordinate system in the storage 52. Additionally, the processor 51 performs processing of outputting numbers of the movement paths 13 corresponding to the inspection images 21 and the coordinate values of the targets 201 in the inspection coordinate system to the processor 41 of the robot controller 40 and the processor 61 of the result display device 60.

As shown in FIGS. 3 and 12, in step S5, the processor 41 of the robot controller 40 performs processing of converting coordinate values of the targets 201 in the inspection coordinate system into coordinate values in the robot coordinate system based on the coordinate transformation information 71. In addition, in step S5, the processor 61 of the result display device 60 performs processing of converting coordinate values of the targets 201 in the inspection coordinate system into coordinate values in the three-dimensional coordinate system based on coordinate transformation information 72. First, processing performed by the processor 41 will be described.

As shown in FIG. 12, based on a number of the movement path 13 corresponding to the inspection image 21, the processor 41 performs processing of identifying the number of the movement path 13 in the coordinate transformation information 71. Subsequently, for the identified number of the movement path 13, the processor 41 performs processing of acquiring, from the coordinate transformation information 71, a movement amount of the robot 10 corresponding to a coordinate value of the target 201 in the inspection coordinate system in the Y-axis direction along the movement path 13. In this processing, the processor 41 performs processing of acquiring, as the corresponding movement amount of the robot 10, a movement amount of the robot 10 that is closest to the coordinate value of the target 201 in the Y-axis direction in the inspection coordinate system. The processor 41 then performs processing of acquiring the coordinate values in the robot coordinate system in the coordinate transformation information 71 corresponding to the acquired movement amount of the robot 10 in the coordinate transformation information 71. As a result, a coordinate value in the robot coordinate system corresponding to the coordinate value of the target 201 in the inspection coordinate system in the Y-axis direction is acquired.

Here, the coordinate values in the robot coordinate system in the acquired coordinate transformation information 71 do not reflect a coordinate value of the target 201 in the X-axis direction in the inspection coordinate system, and include a corresponding deviation. To address this, the processor 41 performs processing of correcting the coordinate values in the robot coordinate system in the acquired coordinate transformation information 71 based on a coordinate value in the inspection coordinate system in the X-axis direction orthogonal to the movement path 13 of the target 201. In this processing, the processor 41 performs processing of adding the coordinate value of the target 201 in the X-axis direction in the inspection coordinate system to correct coordinate values in the robot coordinate system in the coordinate transformation information 71. Thus, the processor 41 performs processing of acquiring coordinate values of the target 201 in the robot coordinate system. In addition, the processor 41 performs processing of converting coordinate values for all the targets 201 to obtain coordinate values in the robot coordinate system.

For example, in an example shown in FIG. 12, a number of the movement path 13 corresponding to the inspection image 21 is 2, and a coordinate value of the target 201 in the X-axis direction is 5.5, and a coordinate value of the target 201 in the Y-axis direction is 15.2. In this case, the processor 41 performs processing of identifying 2 as the number of the movement path 13. Then, for the identified number 2, the processor 41 performs processing of acquiring, as a movement amount of the robot 10, a value of 15, which is closest to the coordinate value of 15.2 of the target 201 in the Y-axis direction. Subsequently, the processor 41 performs processing of acquiring coordinate values (xr, yr, zr, or, ar, tr) in the robot coordinate system corresponding to the movement amount 15 of the robot 10. Thereafter, the processor 41 performs processing of adding the coordinate value of 5.5 of the target 201 in the X-axis direction to correct the coordinate values (xr, yr, zr, or, ar, tr) in the robot coordinate system to acquire coordinate values of the target 201 in the robot coordinate system.

As described above, the processing of the processor 61 of the result display device 60 is similar to the processing of the processor 41 of the robot controller 40, except that the coordinate transformation information 72 is used. That is, based on a number of the movement path 13 corresponding to the inspection image 21, the processor 61 performs processing of identifying the number of the movement path 13 in the coordinate transformation information 72. Subsequently, for the identified number of the movement path 13, the processor 61 performs processing of acquiring, from the coordinate transformation information 72, a movement amount of the robot 10 corresponding to a coordinate value of the target 201 in the inspection coordinate system in the Y-axis direction along the movement path 13. In this processing, the processor 61 performs processing of acquiring, as the corresponding movement amount of the robot 10, the movement amount of the robot 10 that is closest to the coordinate value of the target 201 in the Y-axis direction in the inspection coordinate system. The processor 61 then performs processing of acquiring the coordinate values in the workpiece coordinate system in the coordinate transformation information 72 corresponding to the acquired movement amount of the robot 10 in the coordinate transformation information 72. As a result, a coordinate value in the workpiece coordinate system corresponding to the coordinate value of the target 201 in the inspection coordinate system in the Y-axis direction is acquired.

On the other hand, the coordinate values in the workpiece coordinate system in the acquired coordinate transformation information 72 do not reflect a coordinate value of the target 201 in the X-axis direction in the inspection coordinate system, and include a corresponding deviation. To address this, the processor 61 performs processing of correcting the coordinate values in the workpiece coordinate system in the acquired coordinate transformation information 72 based on a coordinate value in the inspection coordinate system in the X-axis direction orthogonal to the movement path 13 of the target 201. In this processing, the processor 61 performs processing of adding the coordinate value of the target 201 in the X-axis direction in the inspection coordinate system to correct coordinate values in the workpiece coordinate system in the coordinate transformation information 72. Thus, the processor 61 performs processing of acquiring coordinate values of the target 201 in the workpiece coordinate system. In addition, the processor 61 performs processing of converting coordinate values for all the targets 201 to obtain coordinate values in the workpiece coordinate system.

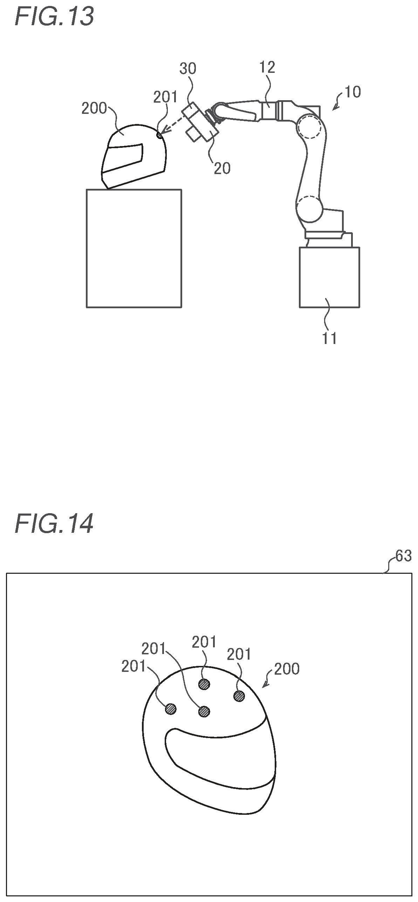

As shown in FIGS. 3 and 13, in step S6, the processor 41 of the robot controller 40 performs processing of indicating a position of the target 201 on the actual workpiece 200 based on the coordinate values of the target 201 converted into the three-dimensional coordinate system. Specifically, the processor 41 performs processing of operating the robot 10 based on coordinate values of the target 201 converted into coordinate values in the robot coordinate system to indicate the position of the target 201 on the actual workpiece 200 using the indicator 30. That is, the processor 41 performs processing of operating the robot 10 to move the indicator 30 to a specified position at which the position of the target 201 can be indicated. Then, the processor 41 performs processing of irradiating laser light from the indicator 30 onto the actual workpiece with the indicator 30 being positioned at the specified position, thereby indicating the position of the target 201 on the actual workpiece 200.

As shown in FIGS. 3 and 14, in step S6, the processor 61 of the result display device 60 performs processing of indicating the position of the target 201 in the three-dimensional image of the workpiece 200 based on the coordinate values of the target 201 converted into coordinate values in the three-dimensional coordinate system. Specifically, the processor 61 performs processing of indicating the position of the target 201 in the three-dimensional image of the workpiece 200 based on the coordinate values of the target 201 converted into coordinate values in the workpiece coordinate system. That is, the processor 61 performs processing of overlaying an image indicating the position of the target 201 on the three-dimensional image of the workpiece 200. Then, the processor 61 performs processing of displaying the three-dimensional image of the workpiece 200 overlaid with the image indicating the position of the target 201 on the display 63. Note that, the three-dimensional image of the workpiece 200 overlaid with the image indicating the position of the target 201 can be enlarged, reduced, or rotated based on operations from the user using the operation receiver 64.

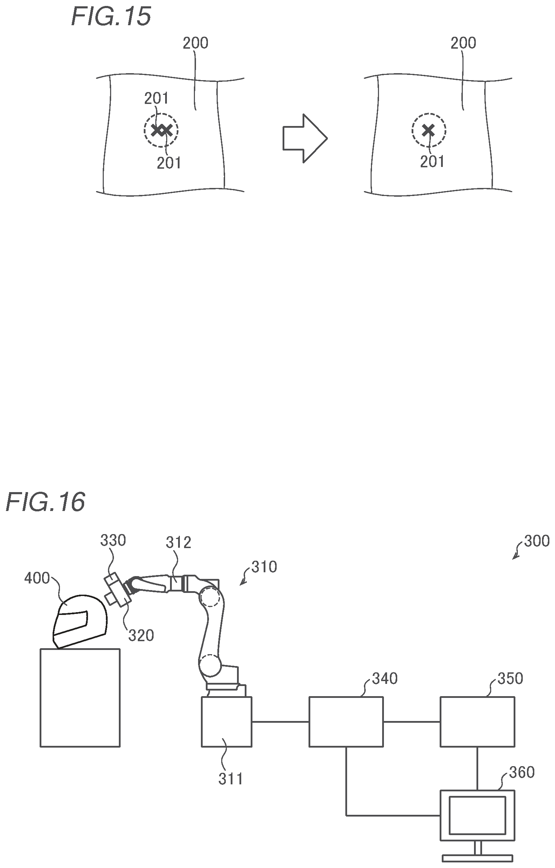

In the first embodiment, as shown in FIG. 15, the processor 41 performs processing of, when coordinate values of a plurality of targets 201 converted into coordinate values in the robot coordinate system are within a threshold range, treating the plurality of targets 201 as a single target 201 and indicating a position of the target 201 on the actual workpiece 200. The threshold is a value for determining whether their coordinate values can be considered as the same position. In other words, when the coordinate values of a plurality of the targets 201 converted into coordinate values in the robot coordinate system can be regarded as indicating the same position, the processor 41 performs processing of collectively treating the plurality of targets 201, which should actually be one, as a single target and indicating the position of the target 201 on the actual workpiece 200. For example, when a target 201 detected from an inspection image 21 corresponding to a certain movement path 13 and another target 201 detected from an inspection image 21 corresponding to a movement path 13 adjacent to the certain movement path 13 have coordinate values converted into coordinate values in the robot coordinate system that are within the threshold range, the processor 41 performs processing of treating these targets 201 as a single target 201 and indicating the position of the target 201 on the actual workpiece 200.

### (Advantages of First Embodiment)

In the first embodiment, as described above, processing of converting coordinate values of the targets 201 in the inspection coordinate system into coordinate values in the three-dimensional coordinate system based on the generated coordinate transformation information 71 or 72; and processing of indicating positions of the targets 201 on the actual workpiece 200 or in a three-dimensional image of the workpiece 200 based on the converted coordinate values of the targets 201 in the three-dimensional coordinate system are performed. Accordingly, since the positions of the targets 201 can be indicated on the actual workpiece 200 or in a three-dimensional image of the workpiece 200, unlike a case in which the positions of the targets 201 are indicated on a two-dimensional image of the workpiece 200, it is possible to accurately indicate the positions of the targets 201 even in portions of the workpiece 200 having a large curvature or a complicated curved surface.

Also, when indicating the positions of the targets 201 on the actual workpiece 200 or in the three-dimensional image of the workpiece 200, although it is necessary to convert the coordinate values of the targets 201 in the inspection coordinate system into the coordinate values in the three-dimensional coordinate system, processing of converting coordinate values of the targets 201 in the inspection coordinate system into coordinate values in the three-dimensional coordinate system based on the coordinate transformation information 71 or 72 generated based on the movement paths 13 of the robot 10 is performed in the first embodiment. Accordingly since the coordinate transformation information 71 or 72 generated based on the movement paths 13 of the robot 10 has a high correlation with the shape of the workpiece 200, it is possible to accurately convert the coordinate values of the targets 201 in the inspection coordinate system into the coordinate values in the three-dimensional coordinate system. Consequently, by using the accurately converted coordinate values of the targets 201 in the three-dimensional coordinate system, the position of the target 201 can be accurately indicated on the actual workpiece 200 or in the three-dimensional image of the workpiece 200. This effect is particularly advantageous when inspecting a workpiece 200 having a complicated shape.

In addition, by using the coordinate transformation information 71 or 72 created in advance, processing of converting coordinate values of the targets 201 in the inspection coordinate system into coordinate values in the three-dimensional coordinate system can be efficiently performed.

In addition, in the first embodiment, as described above, the processor 41 performs processing of acquiring coordinate values in the three-dimensional coordinate system at intervals of the first distance interval D1 along the movement paths 13 to generate the coordinate transformation information 71 or 72. Accordingly, since the coordinate transformation information 71 or 72 can be generated by uniformly acquiring coordinate values in the three-dimensional coordinate system along the movement paths 13, it is possible to suppress deviation in accuracy of coordinate transformation using the coordinate transformation information 71 or 72.

In addition, in the first embodiment, as described above, the processor 51 performs processing of operating the inspector 20 along the movement paths 13 to inspect the workpiece 200 at intervals of the second distance interval D2 and to acquire the inspection images 21, and the first distance interval D1 is greater than the second distance interval D2. Accordingly, by utilizing the fact that the workpiece 200 needs to be inspected in detail while positions of targets 201 do not need to be indicated in such detail, it is possible to reduce the amount of information of the coordinate transformation information 71 or 72 while ensuring the accuracy required for coordinate transformation using the coordinate transformation information 71 or 72.

In addition, in the first embodiment, as described above, the coordinate transformation information 71 or 72 is a coordinate transformation table that associates movement amounts of the robot 10 in directions along the movement paths 13 with coordinate values in the three-dimensional coordinate system; and the processors 41 and 61 perform, in the processing of converting coordinate values of the targets 201 in the inspection coordinate system into coordinate values in the three-dimensional coordinate system, acquiring movement amounts of the robot 10 in the coordinate transformation table corresponding to coordinate values of the targets 201 in the inspection coordinate system in directions along the movement paths 13, acquiring coordinate values in the three-dimensional coordinate system in the coordinate transformation table corresponding to the acquired movement amount of the robot 10 in the coordinate transformation table, and correcting the acquired coordinate values in the three-dimensional coordinate system in the coordinate transformation table based on coordinate values of the targets 201 in the inspection coordinate system in directions orthogonal to the movement paths 13. Accordingly, by utilizing the fact that movement amounts of the robot 10 along the movement paths 13 correspond to coordinate values of the target 201 in the inspection coordinate system in directions along the movement paths 13, it is possible to easily and accurately convert coordinate values of the target 201 in the inspection coordinate system into coordinate values in the three-dimensional coordinate system.

In addition, in the first embodiment, as described above, the inspection system 100 includes the indicator 30 that is arranged on the robot 10 and indicates positions of the targets 201 with respect to the actual workpiece 200; the three-dimensional coordinate system is a robot coordinate system associated with the robot 10; and the processor 41 performs processing of operating the robot 10 based on coordinate values of the target 201 converted into coordinate values in the robot coordinate system to indicate the position of the target 201 on the actual workpiece 200 using the indicator 30. Accordingly, since coordinate values of the targets 201 can be converted into coordinate values in the robot coordinate system, when the positions of the targets 201 are indicated on the actual workpiece 200 using the robot 10, positions of the targets 201 on the actual workpiece 200 can be easily grasped. Consequently, the positions of the targets 201 can be easily indicated on the actual workpiece 200. In addition, since the indicator 30 is arranged on the robot 10 that performs the inspection, it is not necessary to separately provide a robot on which the indicator 30 is arranged apart from the robot 10 that performs the inspection. As a result, a structural complexity can be suppressed.

In addition, in the first embodiment, as described above, the three-dimensional coordinate system is a workpiece coordinate system associated with the workpiece 200, and the processor 61 performs processing of indicating the position of the target 201 in the three-dimensional image of the workpiece 200 based on the coordinate values of the target 201 converted into coordinate values in the workpiece coordinate system. Accordingly, since coordinate values of the targets 201 can be converted into coordinate values in the workpiece coordinate system, positions of the targets 201 in the three-dimensional image of the workpiece 200 can be easily grasped. Consequently, the positions of the targets 201 can be easily indicated in the three-dimensional image of the workpiece 200.

In addition, in the first embodiment, as described above, the processor 41 performs processing of, when coordinate values of a plurality of the targets 201 converted into coordinate values in the robot coordinate system are within a threshold range, treating the plurality of targets 201 as a single target 201 and indicating a position of the target 201 on the actual workpiece 200. Accordingly, even when a single target 201 is erroneously detected as a plurality of the targets 201, it is possible to avoid a single target 201 being erroneously indicated as the plurality of targets 201. This effect is particularly advantageous in a configuration in which the inspection regions 22 of the inspector 20 partially overlap so that one target 201 may be detected from different inspection images 21 as in the first embodiment.

### [Second Embodiment]

The following description will describe a second embodiment of the present disclosure with reference to FIGS. 16 to 26. In the second embodiment, in addition to the aforementioned configuration of the first embodiment, an example will be described in which, in response to input being received for a displayed target, processing relating to an actual workpiece for the target for which the input is received.

### (Configuration of Inspection System)

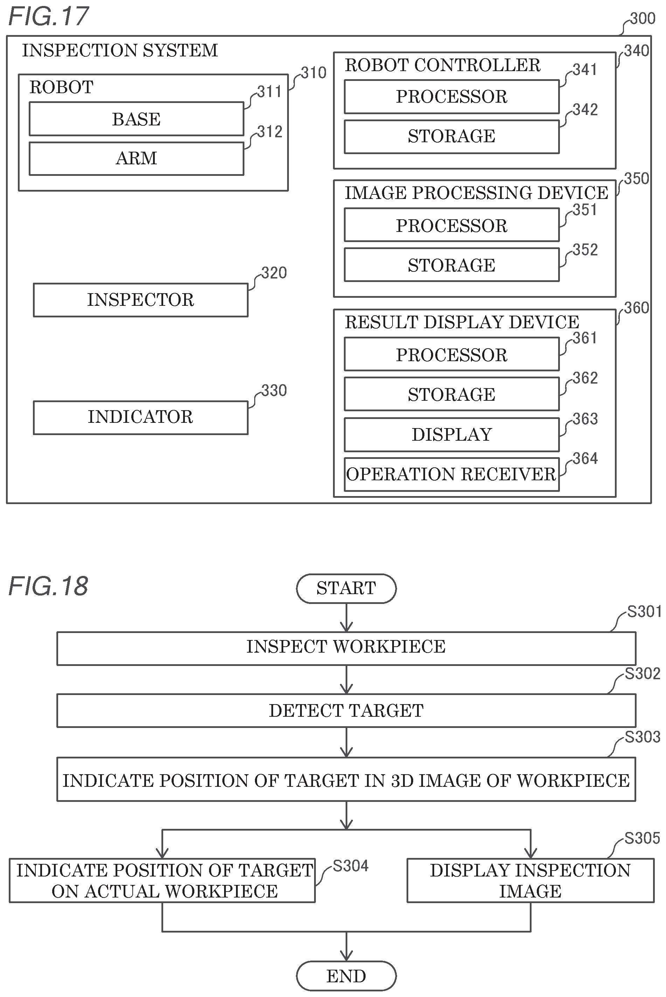

The following description describes an overall configuration of an inspection system 300 according to the second embodiment with reference to FIGS. 16 and 17.

As shown in FIG. 16, the inspection system 300 is an appearance inspection system that inspects the appearance of a workpiece 400. Examples of the workpiece 400 include cars, agricultural machines, pottery, or products of or parts related to home electrical equipment. The workpiece 400 is not particularly limited.

The inspection system 300 includes a robot 310, an inspector 320, an indicator 330, a robot controller 340, an image processing device 350, and a result display device 360. The inspection system 300 is configured to perform processing similar to the aforementioned first embodiment.

The robot 310 moves the inspector 320 relative to the workpiece 400. The robot 310 is a vertical multi-joint robot. The robot 310 includes a base 311, and an arm 312 connected to the base 311. The base 311 is fixed to a mounting surface such as a floor, a wall, and a ceiling. Also, the base 311 may be attached to a movable carriage. The arm 312 includes joints. Each of the joints includes a servomotor as its driving source. In addition, the inspector 320 and the indicator 330 are held at the distal end of the arm 312. The robot 310 moves the inspector 320 and the indicator 330, which are held at the distal end of the arm 312, relative to the fixed workpiece 400 by driving the joints of the arm 312.

The inspector 320 is arranged on the robot 310 to inspect the workpiece 400. The inspector 320 is an imaging unit that captures images of the workpiece 400. Specifically, the inspector 320 is a line camera that is moved along the surface of the workpiece 400 by the robot 310 to scan and capture images of the surface of the workpiece 400.

The indicator 330 is arranged on the robot 310 and indicates the positions of targets 401 to be obtained by inspection on the workpiece 400. The indicator 330 is a laser irradiation unit that emits laser light to indicate the positions of the targets 401 on the workpiece 400.

As shown in FIGS. 16 and 17, the robot controller 340 controls operation of the robot 310. The robot controller 340 includes a processor 341 and a storage 342. The processor 341 includes a processor and performs various types of processing relating to operation of the robot 310. The storage 342 includes a non-volatile memory to store various types of information such as a program for operating the robot 310.

The image processing device 350 performs image processing on images captured by the inspector 320. In addition, the image processing device 350 controls imaging timing of the inspector 320. The image processing device 350 includes a processor 351 and a storage 352. The processor 351 includes a processor to perform various types of processing relating to images captured by the inspector 320 and imaging timing of the inspector 320. The storage 352 includes a non-volatile memory to store various types of information such as a program for performing image processing.

The result display device 360 displays inspection results of the workpiece 400. The result display device 360 includes a processor 361, a storage 362, a display 363, and an operation receiver 364. The processor 361 includes a processor, and performs various types of processing relating to display of inspection results of the workpiece 400. The storage 362 includes a non-volatile memory to store various types of information such as a program for displaying inspection results of the workpiece 400 and a three-dimensional image of the workpiece 400. The display 363 includes a monitor such as a liquid crystal display monitor, and displays screens of inspection results of the workpiece 400. The operation receiver 364 includes an input device such as a mouse and keyboard to receive user input operations. Note that the display 363 and the operation receiver 364 may be integrated. In other words, the display 363 and the operation receiver 364 may be configured by a combined operation and display unit such as a touch panel.

### (Control Processing of Inspection System)

The following description describes control processing of the inspection system 300 with reference to FIGS. 18 to 26.

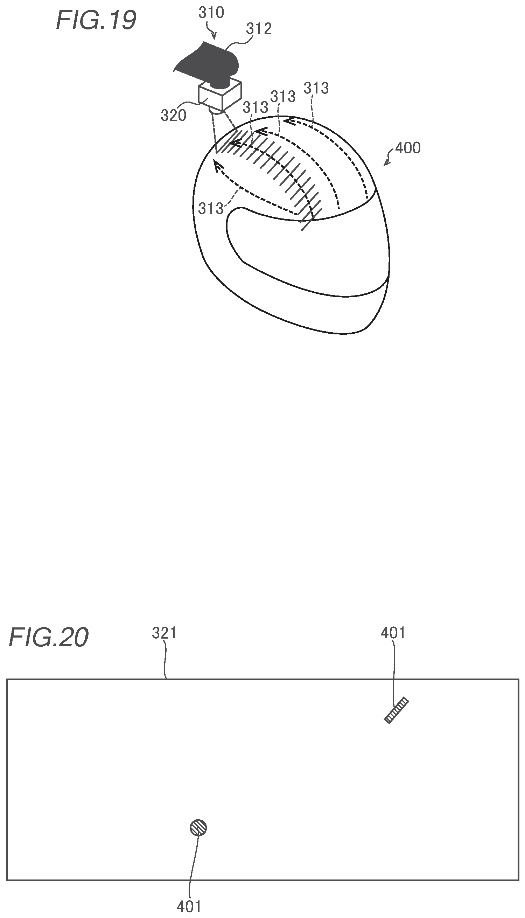

As shown in FIGS. 18 and 19, in step S301, the processor 341 of the robot controller 340 performs processing of operating the robot 310 based on the movement paths 313 to inspect the workpiece 400 using the inspector 320. The movement paths 313 are paths for operating the arm 312 of the robot 310 and are generated to inspect the workpiece 400. In addition, the movement paths 313 are generated in advance before inspecting the workpiece 400.

For example, the processor 341 receives instructions from a user for operation of the arm 312 and generates the movement paths 313 of the robot 310 based on the received instructions. In addition, for example, the processor 341 performs processing of automatically generating the movement paths 313 of the robot 310 independently of instructions from the user for the operation of the arm 312. The processor 341 performs processing of generating the movement paths 313 along a surface, such as a curved surface, of the workpiece 400. Also, the processor 341 may perform processing of generating the movement paths 13 of the robot 10 in real-time.

As shown in FIGS. 18 to 20, the processor 351 of the image processing device 350 performs processing of acquiring the inspection images 321 based on output results of the inspector 320. The inspection images 321 are images of the surface of the workpiece 400 captured by the inspector 320.

The processor 351 performs processing of operating the inspector 320 along the movement paths 313 to inspect the workpiece 400 at intervals of a fixed distance and to acquire the inspection images 321. Specifically, the processor 351 operates the inspector 320 at intervals of the fixed distance to capture images of the workpiece 400 for scan imaging of the workpiece 400. More specifically, the processor 341 performs processing of outputting pulse signals to the processor 351 at intervals of the fixed distance. The processor 351 performs processing of outputting trigger signals to the inspector 320 at intervals of the fixed distance based on the pulse signals from the processor 341. The inspector 320 captures images of the workpiece 400 at intervals of the fixed distance based on the trigger signals. Here, the fixed distance interval is a distance interval of the control points of the robot 310. When the inspector 320 is an image capturer, the control points of the robot 310 are set at imaging focal positions of the inspector 320. In addition, the imaging focal positions of the inspector 320 are set near the surface of the workpiece 400. The control points of the robot 310 are provided for processing of capturing images of the workpiece 400 using the inspector 320.

The processor 341 performs processing of inspecting the workpiece 400 using the inspector 320 for all the movement paths 313. In addition, the processor 351 performs processing of acquiring inspection images 321 for all the movement paths 313.

As shown in FIGS. 18 and 20, in step S302, the processor 351 of the image processing device 350 performs processing of detecting the targets 401 on the workpiece 400 in the inspection image 321. The processor 351 performs predetermined image processing on the inspection images 321 to detect the targets 401 in the inspection image 321. Examples of the targets 401 include defects, such as scratches, foreign objects, and dents. For all the inspection images 321, the processor 351 performs processing of detecting a target 401 in each inspection image 321. Additionally, the processor 351 performs processing of outputting inspection results of the workpiece 400 to the processor 341 of the robot controller 340 and the processor 361 of the result display device 360.

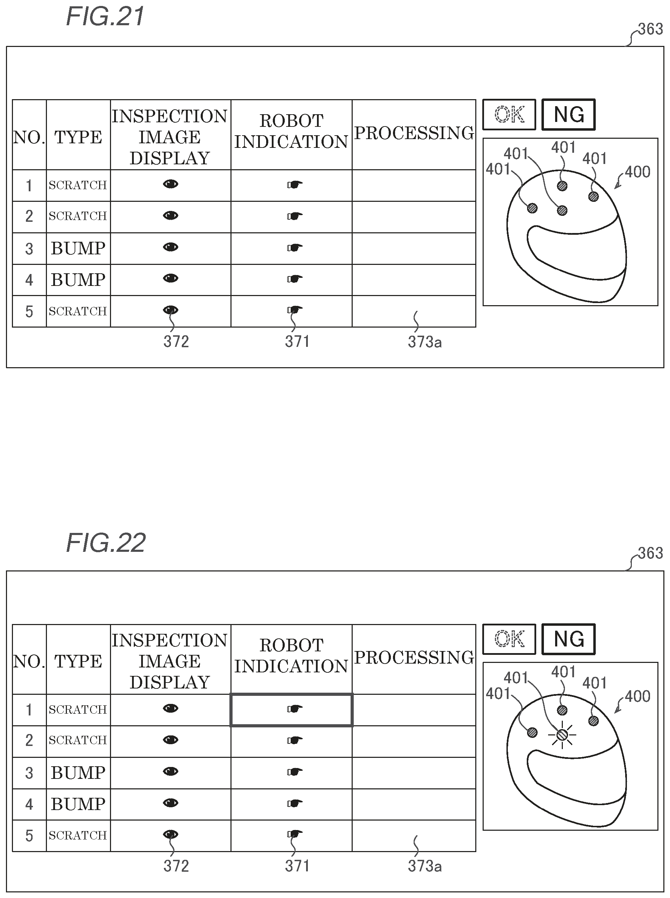

As shown in FIGS. 18 and 21, in step S303, the processor 361 of the result display device 360 performs processing of displaying positions of the targets 401 in the three-dimensional image of the workpiece 400. Specifically, the processor 361 performs predetermined coordinate transformation processing for converting coordinate values of the target 401 in the inspection image 321 into coordinate values of the target 401 in the three-dimensional image of the workpiece 400, and processing of indicating the positions of the targets 401 in the three-dimensional image of the workpiece 400. In this processing, the processor 361 performs processing of overlaying an image indicating the positions of the targets 401 on the three-dimensional image of the workpiece 400. Then, the processor 361 performs processing of displaying the three-dimensional image of the workpiece 400 overlaid with the image indicating the positions of the targets 401 on the display 363. Note that, the three-dimensional image of the workpiece 400 overlaid with the image indicating the positions of the targets 401 can be enlarged, reduced, or rotated based on operations from the user using the operation receiver 364. Note that, images indicating the positions of the targets 401 may be displayed in different colors or different shapes depending on the types of the targets 401, such as scratches, foreign objects, or dents.

In addition, the processor 361 performs processing of displaying inspection results of the workpiece 400 in a list form. The inspection results of the workpiece 400 represent results of performing processing of detecting the targets 401 in the inspection image 321 for all the inspection images 321. The inspection results of the workpiece 400 include the numbers of the detected target 401 and types of the detected targets 401.

In addition, in the second embodiment, the processor 361 performs processing of displaying operation images 371 or 372 in a list form together with the inspection results of the workpiece 400. The operation images 371 are images for performing processing of operating the robot 310 to indicate the position of the later-described target 401 on the actual workpiece 400. The operation images 372 are images for displaying inspection images 321 of the later-described targets 401. The operation images 371 or 372 are displayed in a list form along with the inspection results of the workpiece 400 so that the correspondence with the numbers and types of the detected targets 401 is identifiable. The processor 361 performs processing of displaying the inspection results of the workpiece 400 in a list form and the operation images 371 or 372 on the display 363. In addition, the processor 361 performs processing of displaying the three-dimensional image of the workpiece 400 in a list form, the inspection results of the workpiece 400 and the operation images 371 or 372 in the same frame. The operation images 371 are examples of a first operation image. The operation images 372 are examples of a second operation image.

Here, in the second embodiment, as shown in FIGS. 18, 22 to 25, in steps S304 and S305, in response to input being received for a target 401, the processor 361 performs processing relating to the actual workpiece 400 for the target 401 for which the input is received. Specifically, when an operation image 371 or 372 corresponding to a target 401 is operated, the processor 361 performs processing relating to the actual workpiece 400 for the target 401 corresponding to the operated operation image 371 or 372. The user operates a desired operation image 371 or 372 using the operation receiver 364.

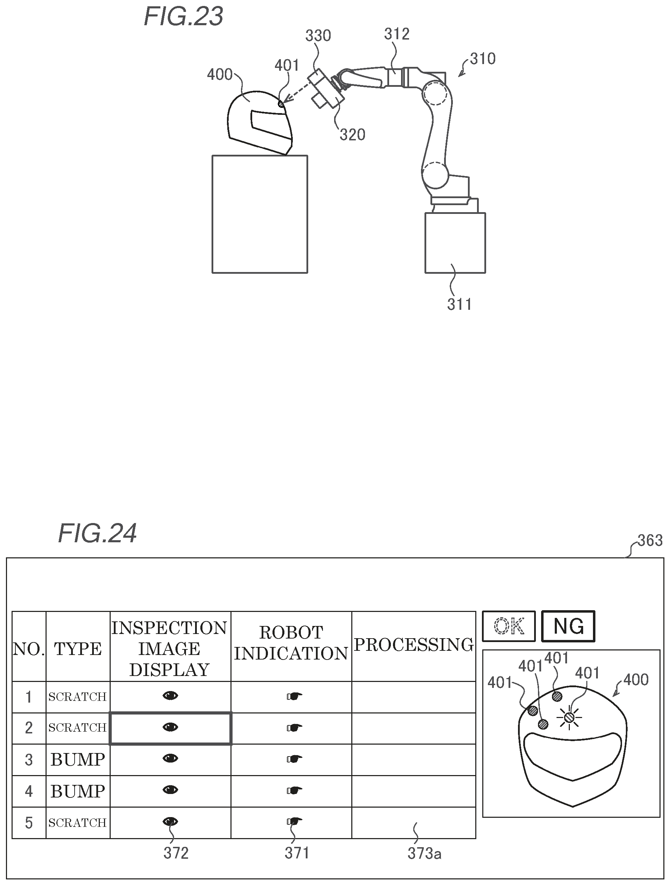

When an operation image 371 is operated, the processor 361 performs the processing of step S304. As shown in FIGS. 22 and 23, in step S304, the processor 361 performs processing of operating the robot 310 to indicate the position of the target 401 corresponding to the operated operation image 371 on the actual workpiece 400. Specifically, the processor 361 performs processing of outputting identification information for identifying the target 401 corresponding to the operated operation image 371 to the processor 341 of the robot controller 340. For example, the identification information is the number of the target 401. Based on the identification information from the processor 361, the processor 341 identifies the target 401 and performs processing of operating the robot 310 so as to indicate the position of the identified target 401 on the actual workpiece 400 as the position of the target 401 corresponding to the operated operation image 371.

Specifically, the processor 341 performs processing of operating the robot 310 to indicate the position of the target 401 on the actual workpiece 400 using the indicator 330. That is, the processor 341 performs processing of operating the robot 310 to move the indicator 330 to a specified position at which the position of the target 401 can be indicated. Then, the processor 341 performs processing of irradiating laser light from the indicator 330 onto the actual workpiece with the indicator 330 being positioned at the specified position, thereby indicating the position of the target 401 on the actual workpiece 400.

Note that indicating the position of the target 401 corresponding to the operation image 371 on the actual workpiece 400 may be performed for only a single operation image 371 or may be performed collectively for a plurality of the operation images 371. For example, the processor 361 may perform processing of operating the robot 310 to indicate the position of the target 401 corresponding to the operated operation image 371 on the actual workpiece 400 each time the operation image 371 is operated. Alternatively, for example, when a plurality of the operation images 371 are collectively operated, the processor 361 may perform processing of operating the robot 310 to continuously indicate the positions of a plurality of the targets 401 corresponding to the plurality of operated operation images 371 on the actual workpiece 400. In this case, the positions of the plurality of targets 401 on the actual workpiece 400 can be easily confirmed. In addition, when a plurality of operation images 371 of the same type are collectively operated, positions of a plurality of targets 401 of the same type on the actual workpiece 400 can be easily confirmed.

In addition, in the second embodiment, when an operation image 371 is operated, the processor 361 performs processing of highlighting a position of a target 401 corresponding to the operated operation image 371 in the three-dimensional image of the workpiece 400, and processing of operating the robot 310 to indicate the position of the target 401 corresponding to the operated operation image 371 on the actual workpiece 400. For example, the processor 361 performs processing of highlighting the position of the target 401 in the three-dimensional image of the workpiece 400 using highlighting techniques such as blinking, enlarging, or changing a color.

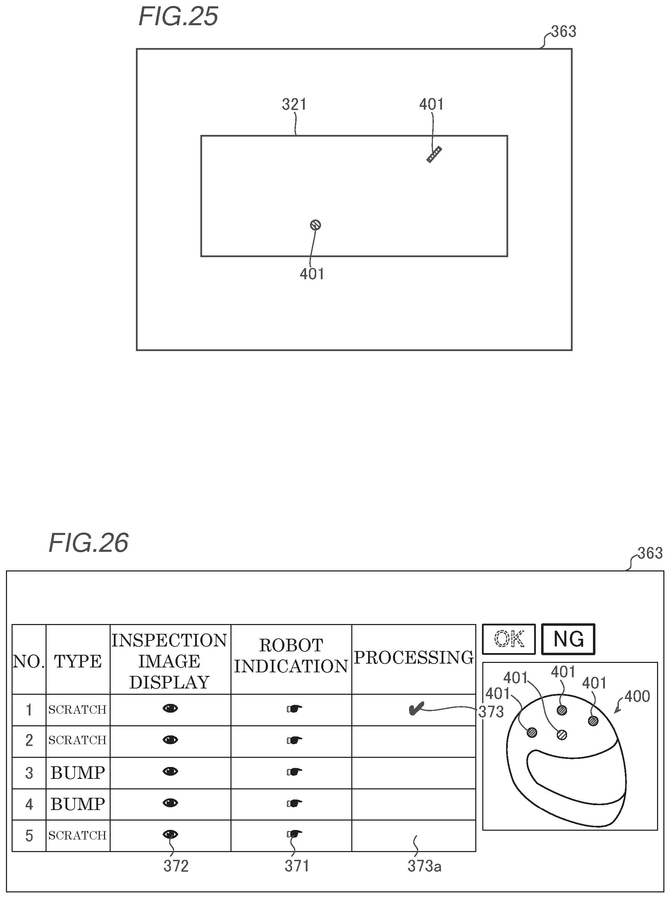

When an operation image 372 is operated, the processor 361 performs the processing of step S305. As shown in FIGS. 24 and 25, in step S305, the processor 361 performs processing of displaying an inspection image 321 of a target 401 corresponding to the operated operation image 372. Specifically, the processor 361 performs processing of displaying the inspection image 321 in a frame different from a frame the three-dimensional image of the workpiece 400, the inspection results of the workpiece 400 in a list form and the operation images 371 or 372 are displayed. Note that the processor 361 may perform processing of displaying the inspection image 321 in the same frame as the frame in which the three-dimensional image of the workpiece 400, the inspection results of the workpiece 400 in a list form and the operation images 371 or 372 are displayed.

In addition, in the second embodiment, when an operation image 372 is operated, the processor 361 performs processing of highlighting a position of a target 401 corresponding to the operated operation image 372 in the three-dimensional image of the workpiece 400, and processing of displaying the inspection image 321 of the target 401 corresponding to the operated operation image 372. For example, the processor 361 performs processing of highlighting the position of the target 401 in the three-dimensional image of the workpiece 400 using highlighting techniques such as blinking, enlarging, or changing a color.

In addition, when an operation image 372 is operated, the processor 361 performs processing of moving the three-dimensional image of the workpiece 400 so as to make the position of the target 401 corresponding to the operated operation image 372 easily visible, and processing of displaying the inspection image 321 of the target 401 corresponding to the operated operation image 372. For example, the processor 361 performs processing of rotating the three-dimensional image of the workpiece 400 such that the target 401 corresponding to the operated operation image 372 faces forward, thereby making the position of the target 401 easily visible. In this case, the position of the three-dimensional image of the workpiece 400 is not fixed at a forward-facing position, but the user can arbitrarily rotate the three-dimensional image of the workpiece 400 using the operation receiver 364.

In addition, in the second embodiment, as shown in FIG. 26, the processor 361 performs processing of displaying an identification display 373 indicating whether processing performed on the target 401 has been completed. The processing performed on the target 401 includes, for example, performing repair work on the target 401 as a defect. Additionally, the identification display 373 is a check mark displayed in a checkbox 373a. When the processing on the target 401 has been completed, the user provides a check into a checkbox 373a using the operation receiver 364 to indicate the identification display 373.

In addition, the processor 361 performs processing of displaying the identification displays 373 and the checkboxes 373a in a list form together with the inspection results of the workpiece 400 and the operation images 371 or 372. The identification displays 373 and the checkboxes 373a are displayed in a list form together with the inspection results of the workpiece 400 so that correspondence with the numbers and types of the detected targets 401 is identifiable. The processor 361 performs processing of displaying the inspection results of the workpiece 400 in a list form, the operation images 371 or 372, the identification displays 373, and the checkboxes 373a on the display 363. In addition, the processor 361 performs processing of displaying the three-dimensional image of the workpiece 400, the inspection results of the workpiece 400 in a list form, the operation images 371 or 372, the identification displays 373, and the checkboxes 373a in the same frame.

Further, in the second embodiment, in addition to processing of displaying the identification display 373, the processor 361 performs processing of displaying, in the three-dimensional image, a position of a target 401 in which processing performed on the target has been completed in a different color from positions of targets 401 in which processing performed on the targets has not been completed. For example, when the color of the targets 401 in which processing performed on the targets has not been completed is red, the position of the target 401 which processing performed on the target has been completed is displayed in green. That is, when an identification display 373 is displayed in a checkbox 373a, the processor 361 performs processing of displaying a position of a target 401 corresponding to the checkbox 373a in which the identification display 373 is displayed in a different color from before the identification display 373 is displayed.

### (Advantages of Second Embodiment)

In the second embodiment, as described above, processing of indicating positions of the target 401 in the three-dimensional image of the workpiece 400; and processing of performing, in response to input being received for the displayed target 401, processing relating to the actual workpiece 400 for the target 401 for which the input is received are performed. Accordingly, the user can not only confirm positions of the targets 401 on the workpiece 400 using the three-dimensional image of the workpiece 400, but also perform, by inputting with respect to a target 401, processing relating to the actual workpiece 400 for the target 401 for which the input is received. Consequently, user convenience relating to the image of the workpiece 400 can be improved as compared with a case in which the positions of the targets 401 are merely indicated on the image of the workpiece 400.

Furthermore, by indicating the positions of the targets 401 in the three-dimensional image of the workpiece 400, the positions of the targets 401 can be made more easily visible, due to the three-dimensional nature of the image, as compared with a case in which the positions of the targets 401 are indicated in a twodimensional image of the workpiece 400.

Also, in the second embodiment, as described above, the processor 361 performs processing of displaying the operation images 371 or 372 corresponding to the targets 401, and performing, when the displayed operation image 371 or 372 is operated, processing relating to the actual workpiece 400 for the target 401 corresponding to the operated operation image 371 or 372. Consequently, since the user can easily provide input for a target 401 using an operation image 371 or 372, user convenience relating to an image of the workpiece 400 can be easily improved.

In addition, in the second embodiment, as described above, when the operation image 371 or 372 is operated, the processor 361 performs either processing of operating the robot 310 to indicate a position of the target 401 corresponding to the operated operation image 371 or 372 on the actual workpiece 400, or processing of displaying the inspection image 321 of the target 401 corresponding to the operated operation image 371 or 372. Accordingly, when the robot 310 is operated to indicate a position of the target 401 corresponding to the operated operation image 371 or 372 on the actual workpiece 400, the user can operate the robot 310 to indicate the position of the target 401 on the actual workpiece 400 simply by operating the operation image 371 or 372 while confirming the three-dimensional image of the workpiece 400. As a result, convenience of the user who wishes to confirm the target 401 on the actual workpiece 400 can be effectively improved. Also, when the inspection image 321 of the target 401 corresponding to the operated operation image 371 or 372 is displayed, the user can display the inspection image 321 acquired from the actual workpiece 400 simply by operating the operation image 371 or 372 while confirming the three-dimensional image of the workpiece 400. Consequently, convenience of the user who wishes to confirm the inspection image 321 can be effectively improved.

In addition, in the second embodiment, as described above, when an operation image 371 or 372 is operated, the processor 361 performs processing of highlighting a position of a target 401 corresponding to the operated operation image 371 or 372 in the three-dimensional image of the workpiece 400, and processing of operating the robot 310 to indicate the position of the target 401 corresponding to the operated operation image 371 or 372 on the actual workpiece 400. As a result, when the robot 310 is operated to indicate the position of the target 401 on the actual workpiece 400, the user can easily confirm the position of the target 401 corresponding to the operated operation image 371 or 372 in the three-dimensional image of the workpiece 400. Consequently, if mistakenly operating an operation image 371 or 372 corresponding to a target 401 for which confirmation is not desired, the user can easily recognize the mistaken operation.

In addition, in the second embodiment, as described above, when an operation image 371 or 372 is operated, the processor 361 performs processing of highlighting a position of a target 401 corresponding to the operated operation image 371 or 372 in the three-dimensional image of the workpiece 400, and processing of displaying the inspection image 321 of the target 401 corresponding to the operated operation image 371 or 372. As a result, when the inspection image 321 of the target 401 corresponding to the operated operation image 371 or 372 is displayed, the user can easily confirm the position of the target 401 corresponding to the operated operation image 371 or 372 in the three-dimensional image of the workpiece 400. Consequently, if mistakenly operating an operation image 371 or 372 corresponding to a target 401 for which confirmation is not desired, the user can easily recognize the mistaken operation.

Also, in the second embodiment, as described above, as the operation images 371 or 372, the operation images 371 corresponding to processing of operating the robot 310 to indicate positions of the targets 401 on the actual workpiece 400, and the operation images 372 corresponding to processing of displaying the inspection images 321 of the targets 401 are included; and the processor 361 performs processing of operating, when an operation image 371 is operated, the robot 310 to indicate a position of the target 401 corresponding to the operated operation image 371 on the actual workpiece 400, and processing of displaying, when an operation image 372 is operated, the inspection image 321 of the target 401 corresponding to the operated operation image 372. As a result, since the operation images 371 and the operation images 372 are provided separately, the user can reliably perform processing of operating the robot 310 by operating the operated operation image 371, and processing of displaying inspection image 321 by operating the operated operation image 372.

In addition, in the second embodiment, as described above, the processor 361 performs processing of displaying the operation images 371 or 372 in a list form together with the inspection results of the workpiece 400. As a result, since the operation images 371 or 372 can be displayed in a list form together with the inspection results of the workpiece 400, the user can easily identify and operate an operation image 371 or 372 corresponding to a target 401 that the user wishes to confirm.

In addition, in the second embodiment, as described above, the processor 361 performs processing of displaying the identification display 373 indicating whether processing performed on the target 401 has been completed. As a result, the user can reliably confirm whether processing performed on the target 401 has been completed through the identification display 373. Also, traceability can be ensured by displaying whether processing on the target 401 has been completed.

Further, in the second embodiment, as described above, in addition to processing of displaying the identification display 373, the processor 361 performs processing of displaying, in the three-dimensional image of the workpiece 400, a position of a target 401 in which processing performed on the target has been completed in a different color from positions of targets 401 in which processing performed on the targets has not been completed. As a result, the user can more reliably confirm whether processing performed on the target 401 has been completed through both the identification display 373 and the color of the target 401.

### [Third Embodiment]

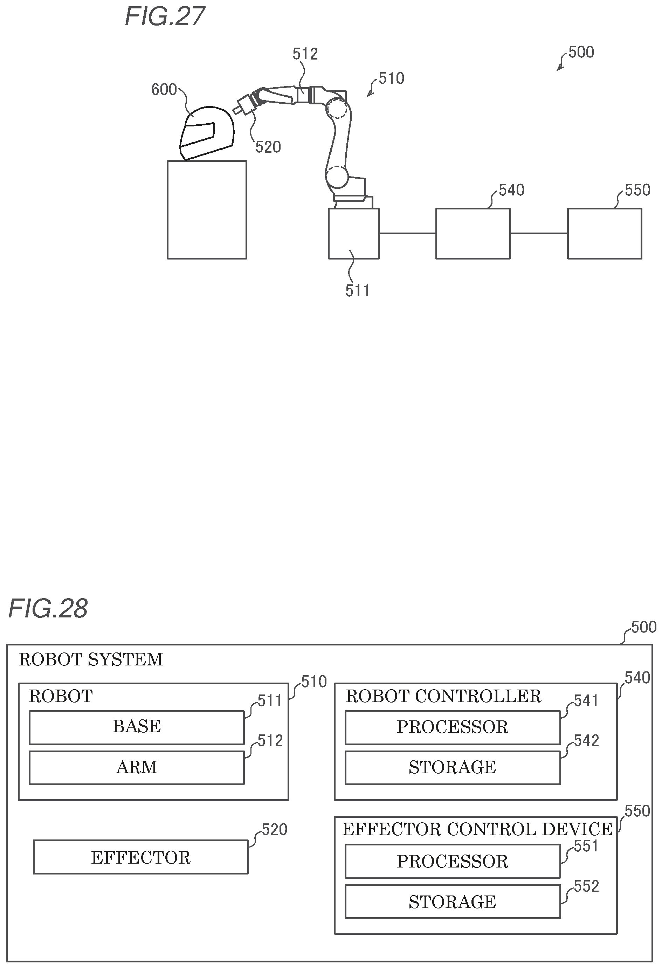

The following description will describe a third embodiment of the present disclosure with reference to FIGS. 27 to 33.

### (Configuration of Inspection System)

An overall configuration of a robot system 500 according to the third embodiment is described with reference to FIGS. 27 and 28.

As shown in FIG. 27, the robot system 500 is a system that performs work on a workpiece 600. The work includes painting work performed on the workpiece 600, for example.

The robot system 500 includes a robot 510, an effector 520, and a robot controller 540.

The robot 510 moves the effector 520 relative to the workpiece 600. The robot 510 is a vertical multi-joint robot. The robot 510 includes a base 511, and an arm 512 connected to the base 511. The base 511 is fixed to a mounting surface such as a floor, a wall, and a ceiling. Also, the base 511 may be attached to a movable carriage. The arm 512 includes joints. Each of the joints includes a servomotor as its driving source. In addition, the effector 520 is held at the distal end of the arm 512. The robot 510 moves the effector 520, which is held at the distal end of the arm 512, relative to the fixed workpiece 600 by driving the joints of the arm 512.

The effector 520 is arranged on the robot 510 and performs work on the workpiece 600. For example, the effector 520 is a paint applier that performs painting work on the workpiece 600. In this case, for example, the effector 520 is a paint applier that sprays paint by inkjet, and is moved along a surface of the workpiece 600 using the robot 510 to perform painting work on the workpiece 600 by applying paint to the surface of the workpiece 600.

As shown in FIGS. 1 and 2, the robot controller 540 controls operation of the robot 510. The robot controller 540 includes a processor 541 and a storage 542. The processor 541 includes a processor and performs various types of processing relating to operation of the robot 510. The storage 542 includes a non-volatile memory, and stores coordinate information 571 and the like, which will be described later.

An effector control device 550 controls work timing of the effector 520. The effector control device 550 includes a processor 551 and a storage 552. The processor 551, including a processor, performs various types of processing relating to the work timing of the effector 520. The storage 552 includes a non-volatile memory and stores various types of information such as a program for controlling the work timing of the effector 520.

### (Control Processing of Robot System)

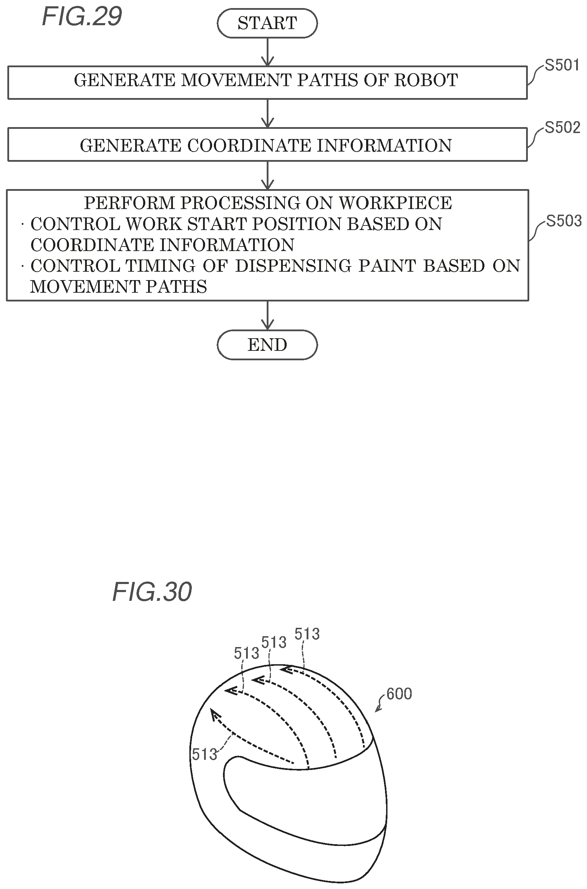

The following description will describe control processing of the robot system 500 with reference to FIGS. 29 to 33.

As shown in FIGS. 29 and 30, in step S501, processing of generating movement paths 513 of the robot 510 is performed similarly to the processing of generating the movement paths 13 in the aforementioned first embodiment. That is, the processor 541 of the robot controller 540 performs processing of moving the effector 520 relative to the workpiece 600 using the robot 510 to generate the movement paths 513 of the robot 510 during work on the workpiece 600 using the effector 520. The movement paths 513 are paths for operating the arm 512 of the robot 510 and are generated to perform work on the workpiece 600.

For example, the processor 541 receives instructions from a user for operation of the arm 512 and generates the movement paths 513 of the robot 510 based on the received instructions. In addition, for example, the processor 541 performs processing of automatically generating the movement paths 513 of the robot 510 independently of instructions from the user for the operation of the arm 512. The processor 541 performs processing of generating the movement paths 513 along a surface, such as a curved surface, of the workpiece 600. Also, the processor 541 may perform processing of generating the movement paths 513 of the robot 10 in real-time.

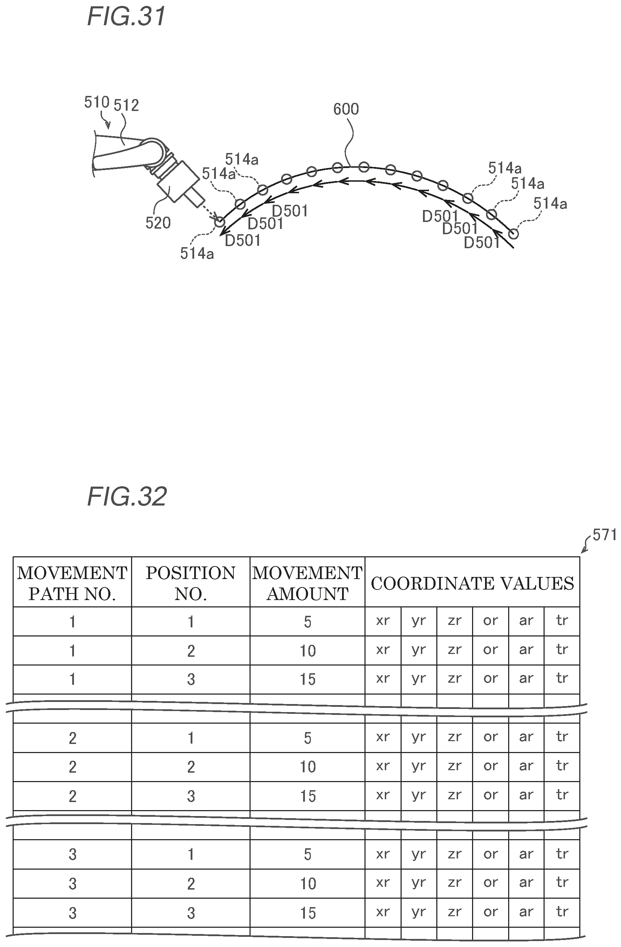

Here, in the third embodiment, as shown in FIGS. 29 and 32, in step S502, processing of generating the coordinate information 571 is performed similarly to the processing of generating the coordinate transformation information 71 in the aforementioned first embodiment. That is, the processor 541 of the robot controller 540 performs processing of generating the coordinate information 571 based on the generated movement paths 513. The coordinate information 571 is information that includes movement amounts of the robot 510 in directions along the movement paths 513 and coordinate values of the workpiece 600 in a three-dimensional coordinate system capable of representing coordinate values in three dimensions. The three-dimensional coordinate system is a three-axis orthogonal coordinate system having three axes orthogonal to each other.

As shown in FIG. 31, the processor 541 performs processing of acquiring coordinate values in the three-dimensional coordinate system at intervals of a first distance interval D501 along the movement paths 513 to generate the coordinate information 571. In this case, the processor 541 actually moves the effector 520 along the movement paths 513 using the robot 510 relative to the workpiece 600, and performs processing of acquiring coordinate values in the three-dimensional coordinate system at intervals of the first distance interval D501. Here, the first distance interval D501 is a distance interval of control points 514a set with respect to the effector 520. The processor 541 performs processing of acquiring the coordinate values of the control points 514a in the three-dimensional coordinate system at intervals of the first distance interval D501. The control points 514a are provided for processing of acquiring the coordinate values in the three-dimensional coordinate system.

Note that, although only one movement path 513 is illustrated in FIG. 31 for ease of illustration, the processor 541 performs processing of acquiring coordinate values in the three-dimensional coordinate system along all the movement paths 513 to generate the coordinate information 571.

As shown in FIG. 32, the coordinate information 571 is a coordinate table that associates movement amounts of the robot 510 in directions along the movement paths 513 with coordinate values in the three-dimensional coordinate system. In FIG. 32, path numbers represent numbers of the movement paths 513, position numbers represent numbers of the control points 514a, the movement amounts represent the movement amounts of the robot 510 at the control points 514a along the movement paths 513, and the coordinate values represent the coordinate values of the control points 514a in the three-dimensional coordinate system. In other words, in the coordinate information 571, the movement amounts of the robot 510 at the control points 514a are associated with the coordinate values of the control points 514a in the three-dimensional coordinate system for each movement path 513.

In this case, coordinate values of the coordinate information 571 in the three-dimensional coordinate system may include only values acquired at intervals of the first distance interval D501 as the coordinate values in the three-dimensional coordinate system, or may include values acquired at intervals of the first distance interval D501 as the coordinate values in the three-dimensional coordinate system and values interpolated based on the acquired values as the coordinate values in the three-dimensional coordinate system. That is, the coordinate information 571 at 5-mm intervals may be generated by acquiring coordinate values at intervals of 5 mm in the three-dimensional coordinate system, or the coordinate information 571 at 5-mm intervals may be generated by acquiring coordinate values at intervals of 10 mm in the three-dimensional coordinate system and by interpolating values between the acquired coordinate values in the three-dimensional coordinate system. Here, examples of interpolation include polynomial interpolation and linear interpolation. In addition, examples of linear interpolation include straight-line interpolation and circular-arc interpolation. Also, the movement amounts in the coordinate information 571 may be obtained from movement amounts in actual movement of the robot 510, or may be obtained from movement amounts calculated based on movement commands of the robot 510.

In the coordinate information 571, the three-dimensional coordinate system is a robot coordinate system associated with the robot 510. The robot coordinate system is a coordinate system with reference to the base 511. The coordinate information 571 is a coordinate transformation table that associates movement amounts of the robot 510 with coordinate values in the robot coordinate system. In the coordinate information 571, the coordinate values representing the position and the orientation of the control point 514a in the robot coordinate system are used as the coordinate values. In addition, the processor 541 performs processing of storing the coordinate information 571 in the storage 542.

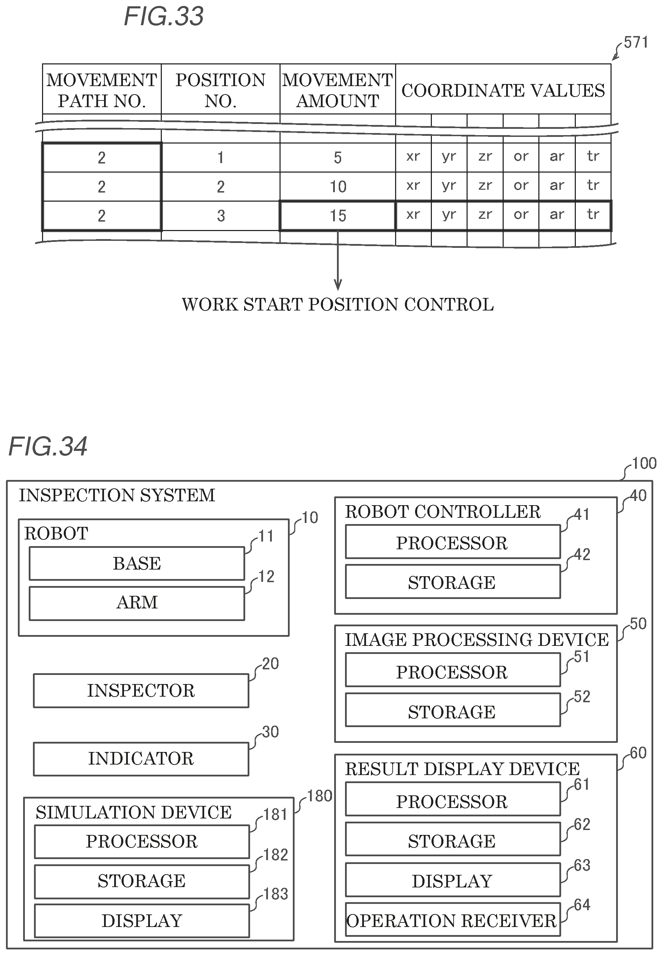

As shown in FIGS. 29 and 33, in step S503, the processors 541 and 551 perform processing of operating the robot 510 based on the generated movement paths 513 and the coordinate information 571 to perform work on the workpiece 600 using the effector 520. In this processing, the processors 541 and 551 perform processing of controlling a work start position at which work on the workpiece 600 starts using the effector 520 based on the coordinate information 571. When the effector 520 is a paint applier, the work start position is a paint application start position at which application of paint starts. Furthermore, the processor 541 controls the timing of dispensing paint using the robot 510 based on the movement paths 513.

As shown in FIG. 33, based on a number of the movement path 513 for which work is performed, the processor 541 performs processing of identifying the number of the movement path 513 in the coordinate information 571. In addition, the processor 541 performs processing of acquiring coordinate values of the robot 10 in the robot coordinate system corresponding to the work start position on the movement path 513 for which work is performed. Then, the processor 541 performs processing of acquiring, from the coordinate information 571, a movement amount of the robot 10 corresponding to the identified number of the movement path 513 and the acquired coordinate values of the robot 10 in the robot coordinate system as the work start position. Thus, the processor 541 performs processing of acquiring, from the coordinate information 571, the movement amount of the robot 10 to the work start position. As a result, the processor 541 performs processing of confirming an appropriate work start position.

Then, the processors 541 and 551 perform processing of controlling the work start position based on the movement amount of the robot 10 to the work start position acquired from the coordinate information 571. Specifically, the processor 541 is configured to be able to output a number of pulse signals corresponding to the movement amount of the robot 10. To achieve this, the processor 541 performs processing of setting the number of pulse signals corresponding to the movement amount of the robot 10 acquired from coordinate information 571 as the work start position. Further, the processor 541 performs processing of outputting the set number of pulse signals to the processor 551. Furthermore, the processor 551 performs processing of outputting a trigger signal to the effector 520 at a position corresponding to the movement amount of the robot 10 acquired as the work start position based on pulse signals from the processor 541. The effector 520 performs work on the workpiece 600 based on the trigger signal. When the effector 520 is a paint applier, the effector 520 applies paint to the workpiece 600.

### (Advantages of Third Embodiment)

In the third embodiment, as described above, the processors 541 and 551 that perform processing of generating, based on the generated movement path 513, coordinate information 571 including a movement amount of the robot 510 in a direction along the generated movement path 513 and coordinate values in a three-dimensional coordinate system representing coordinate values of the workpiece 600 in three dimensions, and processing of operating the robot 510 based on the generated movement path 513 and the generated coordinate information 571 to perform work on the workpiece 600 using the effector 520 are provided. Accordingly, since the operation and trajectory of the robot 510 can be grasped by using not only the movement path 513 but also the movement amount of the robot 510 and the coordinate values of the workpiece 600 included in the coordinate information 571, it is possible to accurately grasp the timing for controlling work on the workpiece. Consequently, it is possible to accurately perform work on the workpiece 600 using the effector 520. Furthermore, when the effector 520 is a paint applier, it is possible to suppress occurrence of paint edges at specific positions.

Further, in the third embodiment, as described above, the processors 541 and 551 perform processing of controlling work start position at which work on the workpiece 600 starts using the effector 520 based on a movement amount of the robot 510 to the work start position acquired from the coordinate information 571. Here, when the work start position at which work on the workpiece 600 starts using the effector 520 is important, the robot 510 may be temporarily stopped in order to start the work on the workpiece 600 using effector 520 at an accurate position with positional deviation suppressed. However, when the robot 510 is temporarily stopped, it is difficult to efficiently perform work on the workpiece 600 using the effector 520. To address this, according to the aforementioned configuration, since the work start position can be controlled based on the movement amount of the robot 10, even when the robot 10 is operating continuously, work on the workpiece 600 using the effector 520 can be started at an accurate position with suppressed positional deviation. As a result, as compared with a case in which the robot 510 is temporarily stopped, work on the workpiece 600 using the effector 520 can be performed more efficiently. Also, when painting is performed by inkjet, painting defects occur due to positional deviation of a position at which application of paint is started, and therefore the position at which application of paint is started is important. For this reason, when the effector 520 is a paint applier, it is particularly advantageous that work on the workpiece 600 using the effector 520 can be started at an accurate position with suppressed positional deviation even when the robot 10 is operating continuously.

### (Modified Examples)

Note that the embodiment disclosed this time must be considered as illustrative in all points and not restrictive. The scope of the present disclosure is not shown by the above description of the embodiments but by the scope of claims for patent, and all modifications (modified examples) within the meaning and scope equivalent to the scope of claims for patent are further included.

While the example in which the inspection system is an appearance inspection system that inspects the appearance of a workpiece has been shown in the aforementioned first and second embodiments, the present disclosure is not limited to this. In the present disclosure, the inspection system may be an inspection system that inspects the inside of a workpiece. In this case, the inspector may be an ultrasonic flaw detector that inspects the workpiece by transmitting ultrasonic waves into a workpiece and receiving ultrasonic waves reflected inside the workpiece. When the ultrasonic flaw detector is used, targets such as defects inside the workpiece can be detected. Also, the inspector may be an eddy current inspector that inspects a workpiece by detecting eddy currents generated in the workpiece by bringing a coil carrying alternating current power close to the workpiece. Also, the inspector may be an X-ray inspector that inspects a workpiece by irradiating the workpiece with X-rays and detecting X-rays transmitted through the workpiece.

Further, while the example in which the robot is a vertical multi-joint robot has been shown in the aforementioned first to third embodiments, the present disclosure is not limited to this. In the present disclosure, the robot may be an industrial robot other than the vertical multi-joint robot.

While the example in which the robot moves the inspector relative to the workpiece by moving the inspector has been shown in the aforementioned first and second embodiments, the present disclosure is not limited to this. In the present disclosure, the robot may move the inspector relative to the workpiece by moving the workpiece.

While the example in which the processor of the robot controller, the processor of the image processing device, and the processor of the result display device share processing to perform various types of processing has been shown in the aforementioned first and second embodiments, the present disclosure is not limited to this. In the present disclosure, the number and configuration of the processors are not particularly limited. A single processor may perform various types of processing of the aforementioned embodiments, or a plurality of processors may perform various types of processing in the aforementioned first and second embodiments. Also, the configuration of the storage is not limited. Also, the configurations of the robot controller, the image processing device, and the result display device are not limited. The robot controller, the image processing device, and the result display device may be integrated into a single configuration, or may be configured separately as in the aforementioned first and second embodiments. Also, the robot controller, the image processing device, and the result display device may be configured in a further distributed manner. For example, an operation device for operating the result display device may be provided separately from the result display device.

While the example in which the processor of the robot controller performs processing of generating the movement path, and processing of generating the coordinate transformation information has been shown in the aforementioned first embodiment, the present disclosure is not limited to this. In the present disclosure, the inspection system 100 may include a simulation device 180 that generates movement paths 13 of a robot 10 on a display screen by simulation, as shown in a modified example in FIG. 34, without using an actual apparatus. In the modified example, the simulation device 180 includes a processor 181, a storage 182, and a display 183. The processor 181 includes a processor and performs various types of processing relating to simulation. The storage 182 includes a non-volatile memory and stores coordinate transformation information 71 or 72, and the like. The display 183 includes a monitor such as a liquid crystal display monitor and displays a simulation screen, and the like.

The processor 181 performs processing of displaying a three-dimensional image of the robot 10, the inspector 20, and the workpiece 200 on the display 183, and processing of generating the movement path 13 of the robot 10 using simulation. Furthermore, the processor 181 performs processing of generating the coordinate transformation information 71 or 72 based on the generated movement paths 13. The processor 181 performs processing of storing the coordinate transformation information 71 or 72 in the storage 182. Furthermore, the processor 181 performs processing of outputting coordinate transformation information 71 to the processor 41 of the robot controller 40, and processing of outputting the coordinate transformation information 72 to the processor 61 of the result display device 60. Note that, in the aforementioned second embodiment, processing of generating the movement paths of the robot may be performed by the simulation device. Also, in the aforementioned third embodiment, processing of generating the movement path of the robot and processing of generating the coordinate information may be performed by the simulation device.

While the example in which both processing of indicating a position of a target on an actual workpiece and processing of indicating the position of the target on a three-dimensional image of the workpiece are performed has been shown in the aforementioned first embodiment, the present disclosure is not limited to this. In the present disclosure, only one of the processing of indicating the position of the target on the actual workpiece or the processing of indicating the position of the target on the three-dimensional image of the workpiece may be performed.

While the example in which the coordinate transformation information is a coordinate transformation table has been shown in the aforementioned first embodiment, the present disclosure is not limited to this. In the present disclosure, the coordinate transformation information may be information other than a table, such as a coordinate transformation equation.

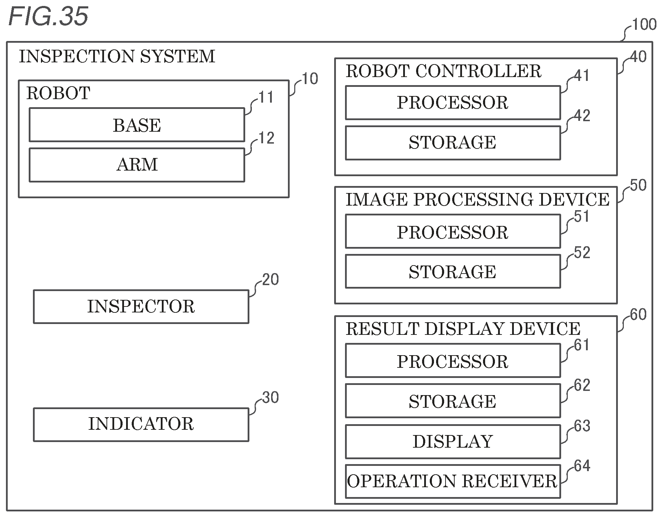

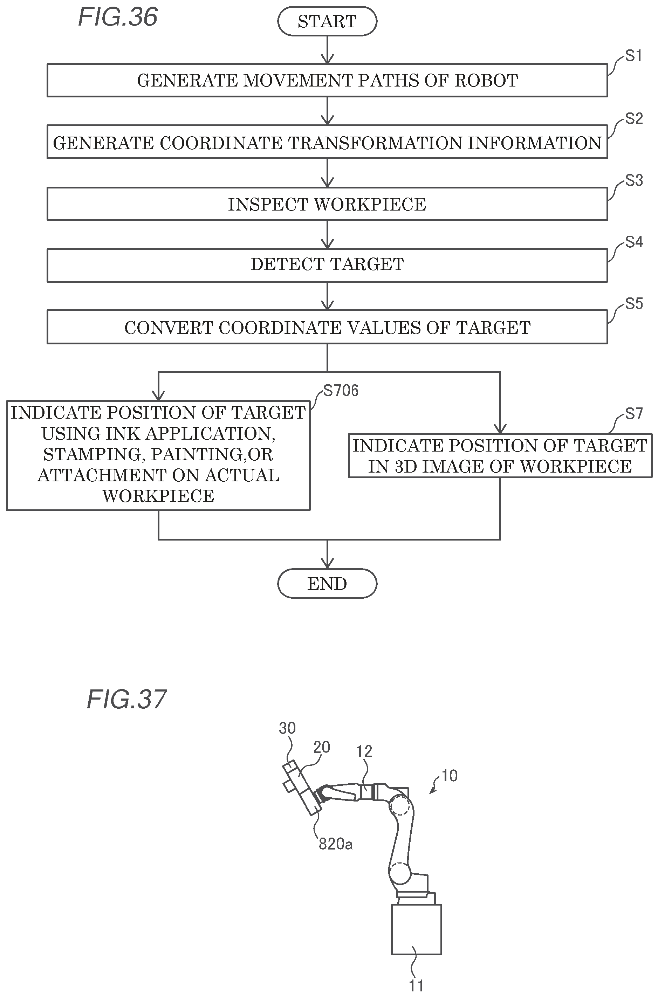

While the example in which the indicator is a laser irradiation unit has been shown in the aforementioned first and second embodiments, the present disclosure is not limited to this. In the present disclosure, the indicator is not particularly limited as long as it can indicate a position of a target on a workpiece. For example, in a modified example shown in FIG. 35, an indicator 730 is an ink application unit that applies ink to indicate the position of the target 201 on the workpiece 200, a stamping unit that stamps to indicate the position of the target 201 on the workpiece 200, a paint spray gun that sprays paint to indicate the position of the target 201 on the workpiece 200, or an attachment unit that attaches an attachment such as a sticker to indicate the position of the target 201 on the workpiece 200. In this case, as shown in FIG. 36, in step S706, the processor 41 of the robot controller 40 performs processing of indicating the position of the target 201 on the actual workpiece 200 using ink application, stamping, painting, or attachment. Also, unlike the aforementioned first and second embodiments, the position of the target on the actual workpiece may be indicated by an augmented reality display device. The augmented reality display device indicates the position of the target on the workpiece by displaying an augmented reality image indicating the position of the target.

While the example in which the indicator is arranged on the robot for inspection has been shown in the aforementioned first and second embodiments, the present disclosure is not limited to this. In the present disclosure, separately from the robot for inspection, a robot for indication on which an indicator is arranged may be provided. The robot for indication operates so as to indicate the position of the target on the actual workpiece. Further, a location at which the workpiece is inspected by the robot for inspection and a location at which the workpiece is indicated by the robot for indication may be different and separate locations.

While the example in which the first distance interval is greater than the second distance interval has been shown in the aforementioned first embodiment, the present disclosure is not limited to this. In the present disclosure, the first distance interval may be not greater than the second distance interval.

While the example in which both processing of operating the robot to indicate a position of a target corresponding to an operation image on an actual workpiece, and processing of displaying an inspection image of the target corresponding to an operation image are performed has been shown in the aforementioned second embodiment, the present disclosure is not limited to this. In the present disclosure, only one of the processing of operating the robot to indicate the position of the target corresponding to the operation image on an actual workpiece, and the processing of displaying the inspection image of the target corresponding to the operation image may be performed.

While the example in which operation images are displayed together with inspection results of a workpiece in a list form has been shown in the aforementioned second embodiment, the present disclosure is not limited to this. In the present disclosure, the operation images may be displayed separately from the inspection results of the workpiece.

While the example in which, when the operation image is operated, a position of the target corresponding to the operated operation image is highlighted in a three-dimensional image of the workpiece has been shown in the aforementioned second embodiment, the present disclosure is not limited to this. In the present disclosure, when the operation image is operated, the position of the corresponding target corresponding to the operated operation image may not be highlighted in the three-dimensional image of the workpiece.

While the example in which an identification display indicating whether processing performed on the target has been completed is displayed has been shown in the aforementioned second embodiment, the present disclosure is not limited to this. In the present disclosure, the identification display indicating whether processing performed on the target has been completed may not be displayed.

While the example in which a position of a target in which processing performed on the target has been completed is displayed in the three-dimensional image in a different color from positions of targets in which processing performed on the targets has not been completed has been shown in the aforementioned second embodiment, the present disclosure is not limited to this. In the present disclosure, the position of the target in which processing performed on the target has been completed may not be displayed in the three-dimensional image in a different color from positions of targets in which processing performed on the targets has not been completed.

While the example in which the inspector and the indicator are held at the distal end of the arm has been shown in the aforementioned first and second embodiments, the present disclosure is not limited to this. For example, in a modified example shown in FIG. 37, the inspector 20, the indicator 30, and an effector 820a may be held at the distal end of the arm 12. The effector 820a performs work on the workpiece 200 that requires inspection by the inspector 20. For example, the effector 820a may be a dispenser for applying sealant to the workpiece 200. Further, the effector 820a may be an attachment unit for attaching a sealing material or a tape material onto the workpiece 200. Further, the effector 820a may be a paint applier for performing painting on the workpiece 200. Further, the effector 820a may be a polisher that performs polishing, deburring, grinding, and buffing on the workpiece 200. Further, the effector 820a may be a sewing unit that performs sewing on the workpiece 200. Further, the effector 820a may be an applier that applies a highly viscous liquid such as sauce, mayonnaise, and chocolate to the workpiece 200. Furthermore, the effector 820a may be a washer that performs washing on the workpiece 200 such as a car.

While the example in which the effector is a paint applier has been shown in the aforementioned third embodiments, the present disclosure is not limited to this. For example, the effector may be an inspector that performs inspection on the workpiece. Further, for example, the effector may be a dispenser for applying sealant to the workpiece. Further, the effector may be an attachment unit for attaching a sealing material or a tape material onto the workpiece. Further, the effector may be a paint applier for performing painting on the workpiece. Further, the effector may be a polisher that performs polishing, deburring, grinding, and buffing on the workpiece. Further, the effector may be a sewing unit that performs sewing on the workpiece. Further, the effector may be an applier that applies a highly viscous liquid such as sauce, mayonnaise, and chocolate to the workpiece. Furthermore, the effector may be a washer that performs washing on the workpiece such as a car.

While the example in which the processors perform processing of controlling the work start position based on the coordinate information has been shown in the aforementioned third embodiment, the present disclosure is not limited to this. In the present disclosure, the processors may perform processing of controlling a position other than the work start position based on the coordinate information.

While the example in which the robot moves the effector relative to the workpiece by moving the effector has been shown in the aforementioned third embodiment, the present disclosure is not limited to this. In the present disclosure, the robot may move the effector relative to the workpiece by moving the workpiece.

While the example in which the processor of the robot controller and the processor of the effector control device share processing to perform various types of processing has been shown in the aforementioned third embodiment, the present disclosure is not limited to this. In the present disclosure, the number and configuration of the processors are not particularly limited. A single processor may perform various types of processing of the aforementioned third embodiment, or a plurality of processors may perform various types of processing in the aforementioned embodiments. Also, the configuration of the storage is not limited. Also, the configurations of the robot controller and the effector control device are not limited. The robot controller and the effector control device may be integrated into a single configuration, or may be configured separately as in the aforementioned third embodiment. Also, the robot controller and the effector control device may be configured in a further distributed manner.

While the example in which the coordinate information is a coordinate table has been shown in the aforementioned third embodiment, the present disclosure is not limited to this. In the present disclosure, the coordinate information may be information other than a table, such as an equation.

Functions of elements disclosed in this specification can be realized by a circuit or processing circuit including a general purpose processor, a dedicated processor, an integrated circuit, ASIC (Application Specific Integrated Circuits), a conventional circuit and/or combination of them configured or programmed to realize the disclosed functions. A processor is considered a processing circuit or circuits because it contains transistors and other circuitry. In the present disclosure, a circuit, a unit, or a means is hardware that performs an enumerated function or is hardware programmed to perform an enumerated function. The hardware may be the hardware disclosed herein or any other known hardware that is programmed or configured to perform the enumerated functions. When the hardware is a processor, which is considered a type of circuit, the circuit, means, or unit is a combination of hardware and software, and software is used to configure the hardware and/or processor.

### [Embodiments]

The aforementioned exemplary embodiments are concrete examples of the following Embodiments.

### (Embodiment 1)

An inspection system includes a robot; an inspector that inspects a workpiece; and a processor that performs processing of moving the inspector relative to the workpiece using the robot to generate a movement path of the robot in inspection of the workpiece using the inspector, processing of generating coordinate transformation information to convert coordinate values of an inspection image in an inspection coordinate system acquired by inspecting the workpiece using the inspector based on the generated movement path into coordinate values in a three-dimensional coordinate system representing coordinate values of the workpiece in three dimensions, processing of operating the robot based on the generated movement path to inspect the workpiece using the inspector and to acquire the inspection image, processing of detecting a target on the workpiece in the acquired inspection image, processing of converting coordinate values of the target in the inspection coordinate system into coordinate values in the three-dimensional coordinate system based on the generated coordinate transformation information, and processing of indicating a position of the target on the actual workpiece or in a three-dimensional image of the workpiece based on the converted coordinate values of the target in the three-dimensional coordinate system.

### (Embodiment 2)

In the inspection system according to Embodiment 1, the processor performs processing of acquiring coordinate values in the three-dimensional coordinate system at intervals of a first distance along the movement path to generate the coordinate transformation information.

### (Embodiment 3)

In the inspection system according to Embodiment 2, the processor performs processing of operating the inspector along the movement path to inspect the workpiece at intervals of a second distance and to acquire the inspection image, and the first distance interval is greater than the second distance interval.

### (Embodiment 4)

In the inspection system according to any of Embodiments 1 to 3, the coordinate transformation information is a coordinate transformation table that associates a movement amount of the robot in a direction along the movement path with coordinate values in the three-dimensional coordinate system; and the processor performs, in the processing of converting coordinate values of the target in the inspection coordinate system into coordinate values in the three-dimensional coordinate system, processing of acquiring a movement amount of the robot in the coordinate transformation table corresponding to coordinate values of the target in the inspection coordinate system in a direction along the movement path, processing of acquiring coordinate values in the three-dimensional coordinate system in the coordinate transformation table corresponding to the acquired movement amount of the robot in the coordinate transformation table, and processing of correcting the acquired coordinate values in the three-dimensional coordinate system in the coordinate transformation table based on coordinate values of the target in the inspection coordinate system in a direction orthogonal to the movement path.

### (Embodiment 5)

In the inspection system according to any of Embodiments 1 to 4, an indicator that is arranged on the robot, and indicates a position of the target with respect to the actual workpiece is further provided; the three-dimensional coordinate system is a robot coordinate system associated with the robot; and the processor performs processing of operating the robot based on coordinate values of the target converted into coordinate values in the robot coordinate system to indicate the position of the target on the actual workpiece using the indicator.

### (Embodiment 6)

In the inspection system according to any of Embodiments 1 to 5, the three-dimensional coordinate system is a workpiece coordinate system associated with the workpiece; and the processor performs processing of indicating a position of the target in the three-dimensional image of the workpiece based on coordinate values of the target converted into coordinate values in the workpiece coordinate system.

### (Embodiment 7)

In the inspection system according to any of Embodiments 1 to 6, the three-dimensional coordinate system is a robot coordinate system associated with the robot; and the processor performs processing of, when coordinate values of a plurality of the targets converted into coordinate values in the robot coordinate system are within a threshold range, treating the plurality of targets as a single target and indicating a position of the target on the actual workpiece.

### (Embodiment 8)

In the inspection system according to any of Embodiments 1 to 7, the processor performs processing of displaying a position of the target in a three-dimensional image of the workpiece, and processing of performing, in response to input being received for the displayed target, processing relating to the actual workpiece for the target for which the input is received.

### (Embodiment 9)

In the inspection system according to Embodiment 8, the processor performs processing of displaying an operation image corresponding to the target, and performing, when the displayed operation image is operated, processing relating to the actual workpiece for the target corresponding to the operated operation image.

### (Embodiment 10)

In the inspection system according to Embodiment 9, when the operation image is operated, the processor performs either processing of operating the robot to indicate a position of the target corresponding to the operated operation image on the actual workpiece, or processing of displaying the inspection image of the target corresponding to the operated operation image.

### (Embodiment 11)

In the inspection system according to Embodiment 10, when the operation image is operated, the processor performs processing of highlighting a position of the target corresponding to the operated operation image in the three-dimensional image, and processing of operating the robot to indicate a position of the target corresponding to the operated operation image on the actual workpiece.

### (Embodiment 12)

In the inspection system according to Embodiment 10 or 11, when the operation image is operated, the processor performs processing of highlighting a position of the target corresponding to the operated operation image in the three-dimensional image, and processing of displaying the inspection image of the target corresponding to the operated operation image.

### (Embodiment 13)

In the inspection system according to any of Embodiments 10 to 12, the operation image includes a first operation image corresponding to the processing of operating the robot to indicate a position of the target on the actual workpiece, and a second operation image corresponding to the processing of displaying the inspection image of the target; and the processor performs processing of operating, when the first operation image is operated, the robot to indicate a position of the target corresponding to the operated first operation image on the actual workpiece, and processing of displaying, when the second operation image is operated, the inspection image of the target corresponding to the operated second operation image.

### (Embodiment 14)

An inspection method includes moving an inspector relative to a workpiece using a robot to generate a movement path of the robot in inspection of the workpiece using the inspector; generating coordinate transformation information to convert coordinate values of an inspection image in an inspection coordinate system acquired by inspecting the workpiece using the inspector based on the generated movement path into coordinate values in a three-dimensional coordinate system representing coordinate values of the workpiece in three dimensions; operating the robot based on the generated movement path to inspect the workpiece using the inspector and to acquire the inspection image; detecting a target on the workpiece in the acquired inspection image; converting coordinate values of the target in the inspection coordinate system into coordinate values in the three-dimensional coordinate system based on the generated coordinate transformation information; and indicating a position of the target on the actual workpiece or in a three-dimensional image of the workpiece based on the converted coordinate values of the target in the three-dimensional coordinate system.

### (Embodiment 15)

A robot system includes a robot; an effector that performs work on a workpiece; and a processor that performs processing of moving the effector relative to the workpiece using the robot to generate a movement path of the robot during work on the workpiece using the effector, processing of generating, based on the generated movement path, coordinate information including a movement amount of the robot in a direction along the movement path and coordinate values in a three-dimensional coordinate system representing coordinate values of the workpiece in three dimensions, and processing of operating the robot based on the generated movement path and the generated coordinate information to perform work on the workpiece using the effector.

### Description of Reference Numerals

10, 310, 510; robot
13, 313, 513; movement path
20, 320; inspector
21, 321; inspection image
30; indicator
41, 341, 541; processor
51, 351, 551; processor
61, 361; processor
71, 72; coordinate transformation information
100, 300; inspection system
181; processor
200, 400, 600; workpiece
201, 401; target
371; operation image (first operation image)
372; operation image (second operation image)
500; robot system
520; effector
571; coordinate information
D1; first distance interval
D2; second distance interval

## Claims

1. An inspection system comprising:
a robot;
an inspector that inspects a workpiece; and
a processor that performs the following processing:
moving the inspector relative to the workpiece using the robot to generate a movement path of the robot in inspection of the workpiece using the inspector;
generating coordinate transformation information to convert coordinate values of an inspection image in an inspection coordinate system acquired by inspecting the workpiece using the inspector based on the generated movement path into coordinate values in a three-dimensional coordinate system representing coordinate values of the workpiece in three dimensions;
operating the robot based on the generated movement path to inspect the workpiece using the inspector and to acquire the inspection image;
detecting a target on the workpiece in the acquired inspection image;
converting coordinate values of the target in the inspection coordinate system into coordinate values in the three-dimensional coordinate system based on the generated coordinate transformation information; and
indicating a position of the target on the actual workpiece or in a three-dimensional image of the workpiece based on the converted coordinate values of the target in the three-dimensional coordinate system.

2. The inspection system according to claim 1, wherein the processor performs processing of acquiring coordinate values in the three-dimensional coordinate system at intervals of a first distance along the movement path to generate the coordinate transformation information.

3. The inspection system according to claim 2, wherein
the processor performs processing of operating the inspector along the movement path to inspect the workpiece at intervals of a second distance and to acquire the inspection image, and
the first distance interval is greater than the second distance interval.

4. The inspection system according to claim 1, wherein
the coordinate transformation information is a coordinate transformation table that associates a movement amount of the robot in a direction along the movement path with coordinate values in the three-dimensional coordinate system, and
the processor performs, in the processing of converting coordinate values of the target in the inspection coordinate system into coordinate values in the three-dimensional coordinate system, the following processing:
acquiring a movement amount of the robot in the coordinate transformation table corresponding to coordinate values of the target in the inspection coordinate system in a direction along the movement path;
acquiring coordinate values in the three-dimensional coordinate system in the coordinate transformation table corresponding to the acquired movement amount of the robot in the coordinate transformation table; and
correcting the acquired coordinate values in the three-dimensional coordinate system in the coordinate transformation table based on coordinate values of the target in the inspection coordinate system in a direction orthogonal to the movement path.

5. The inspection system according to claim 1 further comprising an indicator that is arranged on the robot, and indicates a position of the target with respect to the actual workpiece, wherein
the three-dimensional coordinate system is a robot coordinate system associated with the robot, and
the processor performs processing of operating the robot based on coordinate values of the target converted into coordinate values in the robot coordinate system to indicate the position of the target on the actual workpiece using the indicator.

6. The inspection system according to claim 1, wherein
the three-dimensional coordinate system is a workpiece coordinate system associated with the workpiece, and
the processor performs processing of indicating a position of the target in the three-dimensional image of the workpiece based on coordinate values of the target converted into coordinate values in the workpiece coordinate system.

7. The inspection system according to claim 1, wherein
the three-dimensional coordinate system is a robot coordinate system associated with the robot, and
the processor performs processing of, when coordinate values of a plurality of the targets converted into coordinate values in the robot coordinate system are within a threshold range, treating the plurality of targets as a single target and indicating a position of the target on the actual workpiece.

8. The inspection system according to claim 1, wherein the processor performs the following processing:
displaying a position of the target in a three-dimensional image of the workpiece; and
performing, in response to input being received for the displayed target, processing relating to the actual workpiece for the target for which the input is received.

9. The inspection system according to claim 8, wherein
the processor performs processing of displaying an operation image corresponding to the target, and performing, when the displayed operation image is operated, processing relating to the actual workpiece for the target corresponding to the operated operation image.

10. The inspection system according to claim 9, wherein when the operation image is operated, the processor performs either:
processing of operating the robot to indicate a position of the target corresponding to the operated operation image on the actual workpiece; or
processing of displaying the inspection image of the target corresponding to the operated operation image.

11. The inspection system according to claim 10, wherein when the operation image is operated, the processor performs processing of highlighting a position of the target corresponding to the operated operation image in the three-dimensional image, and processing of operating the robot to indicate a position of the target corresponding to the operated operation image on the actual workpiece.

12. The inspection system according to claim 10, wherein when the operation image is operated, the processor performs processing of highlighting a position of the target corresponding to the operated operation image in the three-dimensional image, and processing of displaying the inspection image of the target corresponding to the operated operation image.

13. The inspection system according to claim 10, wherein the operation image includes:
a first operation image corresponding to the processing of operating the robot to indicate a position of the target on the actual workpiece; and
a second operation image corresponding to the processing of displaying the inspection image of the target, and
the processor performs the following processing:
operating, when the first operation image is operated, the robot to indicate a position of the target corresponding to the operated first operation image on the actual workpiece; and
displaying, when the second operation image is operated, the inspection image of the target corresponding to the operated second operation image.

14. An inspection method comprising:
moving an inspector relative to a workpiece using a robot to generate a movement path of the robot in inspection of the workpiece using the inspector;
generating coordinate transformation information to convert coordinate values of an inspection image in an inspection coordinate system acquired by inspecting the workpiece using the inspector based on the generated movement path into coordinate values in a three-dimensional coordinate system representing coordinate values of the workpiece in three dimensions;
operating the robot based on the generated movement path to inspect the workpiece using the inspector and to acquire the inspection image;
detecting a target on the workpiece in the acquired inspection image;
converting coordinate values of the target in the inspection coordinate system into coordinate values in the three-dimensional coordinate system based on the generated coordinate transformation information; and
indicating a position of the target on the actual workpiece or in a three-dimensional image of the workpiece based on the converted coordinate values of the target in the three-dimensional coordinate system.

15. A robot system comprising:
a robot;
an effector that performs work on a workpiece; and
a processor that performs the following processing:
moving the effector relative to the workpiece using the robot to generate a movement path of the robot during work on the workpiece using the effector;
generating, based on the generated movement path, coordinate information including a movement amount of the robot in a direction along the movement path and coordinate values in a three-dimensional coordinate system representing coordinate values of the workpiece in three dimensions; and
operating the robot based on the generated movement path and the generated coordinate information to perform work on the workpiece using the effector.
